Europäisches Patentamt

European Patent Office

Office européen des brevets

(19)

(11) Veröffentlichungsnummer : **0 035 787
B1**

(12) # EUROPÄISCHE PATENTSCHRIFT

(45) Veröffentlichungstag der Patentschrift :
17.10.84

(51) Int. Cl.³ : **G 11 C 15/00**

(21) Anmeldenummer : **81101727.6**

(22) Anmeldetag : **09.03.81**

(54) **Hybrid-Assoziativspeicher und dessen Anwendungen, insbesondere zum Sortieren von gespeicherten Daten.**

(30) Priorität : **11.03.80 DE 3009330**
**11.03.80 DE 3009329**

(43) Veröffentlichungstag der Anmeldung :
**16.09.81 Patentblatt 81/37**

(45) Bekanntmachung des Hinweises auf die Patenterteilung : **17.10.84 Patentblatt 84/42**

(84) Benannte Vertragsstaaten :
**AT BE CH FR GB IT LI LU NL SE**

(56) Entgegenhaltungen :
**DE-A- 2 033 709**
**FR-A- 2 313 738**
**US-A- 3 648 254**
**INFORMATION PROCESSING 68, Proceedings of the
I.F.I.P. Congress, 1969; North-Holland Publishing
Company Amsterdam, NL ASPINALL et al. : " Associative Memories in Large Computer Systems ", Seiten
796-800**
**IBM TECHNICAL DISCLOSURE BULLETIN, Band 12,
no. 11, April 1970, New York, US GARDNER et al.:
"Subselection in Associative Store", Seiten 2038-
2039**

(73) Patentinhaber : **Siemens Aktiengesellschaft
Berlin und München Wittelsbacherplatz 2
D-8000 München 2 (DE)**

(72) Erfinder : **Wolf, Gerhard
Chopinstrasse 5
D-8000 München 60 (DE)**

## Beschreibung

Die Erfindung betriff einen Hybrid-Assoziativspeicher gemäß dem Oberbegriff des Anspruches 1. Derartige Speicher sind bereits bekannt, z. B. durch die DE-AS 25 25 287 oder durch « data report » 11 (1976), Heft 2, Seite 29 bis 34, insbesondere Seite 32.

Die Bewirtschaftung von Speichern erfordert in der Regel zusätzliche Einrichtungen, z. B. für die Belegungsüberwachung und -steuerung, für die Verwaltung von Parameterlisten, für die Steuerung von Betriebsabläufen, wie z. B. Suchen oder Sortieren von Daten.

So ist z. B. durch die US-PS 3 648 254 ein dreidimensionaler Massenspeicher bekannt, der aus Speicherelementen in Form von Halbleiterschieberegistern mit jeweils 256 Bit modulartig zusammengesetzt ist, wobei 16 Speicherelemente ein Modul bilden und wierdrum 16 Module auf einer Speicherplatte untergebracht sind. 128 solcher Speicherplatten bilden dann den Speicher, wobei jeweils einander korrespondierende Bits aller Speicherplatten parallel für die Ein- oder Ausgabe eines 128-Bit-Datenwortes ansteuerbar sind.

Für den assoziativen Betrieb ist je Modul ein Vergleicher vorgesehen und es werden nach Auswahl jeweils eines Speicherelementes, also Registers, je Modul auf jeder Speicharplatte die 256 Bit in jedem ausgewählten Register nacheinander zusammen jeweils mit den entsprechenden Bits aller ausgewählten Register anhand eines bereitgestellten Vergleichswortes überprüft. Jeder Vergleicher entspricht daher einem Assoziationsfeld einer assoziativen Oberfläche mit einer der Anzahl der Speicherplatten entsprechenden Anzahl von Spalten und einer der Anzahl der Module je Speicherplatte entsprechenden Anzahl von Zeilen, so daß jeweils eine der Anzahl der Zeilen entsprechende Anzahl von Datenwörtern mit einer der Anzahl von Spalten entsprechenden Anzahl von Bitstellen gleichzeitig durch die assoziative Oberfläche überprüft werden kann.

Zusätzlich zu den Speicherplatten für die Datenwörter ist eine weitere, gleichartig aufgebaute Speicherplatte für die Abspeicherung von Markierbits vorgesehen, wobei jedem Datenwort eine Markierbitstelle entspricht, und je Modul ist eine Verknüpfungsanordnung vorgesehen, die aus den geoderten negativen Vergleichssignalen der einzelnen einander entsprechenden Module aller Speicherplatten für die Datenspeicherung und damit je Datenwort das jeweils zugehörige Markierbit in einem Suchlauf ableitet, das dann in einem anschließenden Ausgabelauf die Ausgabe der aufgefundenen Datenwörter steuert. Die Markierbitplatte bildet also eine zusätzliche Spaltenscheibe des dreidimensionalen Datenspeichers, die jeweils analog zu einem im Datenspeicher ausgewählten Datenwort angesteuert wird.

Ein derartiger Aufbau des Basisspeichers wird aber vielen im Rahmen der Bewirtschaftung eines Hybrid-Assoziativspeichers anfallenden Aufgaben nicht gerecht. Aufgabe der Erfindung ist es daher, Hybrid-Assoziativspeicher der eingangs genannten Art so auszubilden, daß der Aufwand für Zusatzeinrichtungen verringert wird, und in Anpassung daran die Abwicklung verschiedener Aufgaben, z. B. die Belegsteuerung oder das Sortieren von Daten, vorteilhafter als bei den bekannten Anordnungen zu gestalten.

Diese Aufgabe wird durch die kennzeichnenden Merkmale des Anspruches 1 gelöst.

Die Erfindung nutzt dabei den Vorteil, daß zusätzlicher Speicherplatz im Basisspeicher eines Hybrid-Assoziativspeichers nicht allzusehr ins Gewicht fällt, und dadurch die Möglichkeit zur zusätzlichen Ausnutzung der bereits vorhandenen assoziativen Oberfläche, mit der sich sehr viele der sonst von gesondert Einrichtungen wahrgenommenen Aufgaben lösen lassen, insbesondere wenn dazu Assoziativspeicher erforderlich sind. Diese assoziativen Steuerungsfunktionen lassen sich damit harmonisch in den normalen Arbeitsablauf des Hybrid-Assoziativspeichers integrieren, da lediglich von den Datenspeichereinheiten auf die gesonderten Speichereinheiten gezielt umgesteuert und die entsprechende Auswertung der dabei gewonnenen Ergebnisse sichergestellt zu werden braucht.

Hiervon ausgehend beziehen sich die Ansprüche 2 bis 4 auf den häufigen Fall der Belegungssteuerung. Dazu enthält eine der gesonderten Speichereinheiten in den einzelnen Speicherabschnitten für jede der für die Speicherung allgemeiner Daten vorgesehenen Speichereinheiten ein Belegungskennzeichen gespeichert, z. B. vollständig frei oder mit wenigstens einem Eintrag belegt. Außerdem sind neben den Trefferausgängen auch die Leseausgänge der Assoziationsmatrix jeweils über einen Inverter mit einer Stufe eines Registers verbunden, dem eine Prioritätssteuerung nachgeschaltet ist, so daß nach Lesen der durch die Prioritätssteuerung der Trefferauswertesteuerung gekennzeichneten Zeile der Assoziationsmatrix anhand der von beiden Prioritätssteuerungen gelieferten Koordinatenwerte die Adresse einer nicht belegten Speichereinheit abhängig von den in der gesonderten Speichereinheit gespeichert enthaltenen Belegungskennzeichen ermittelt werden kann. Die dabei verwendeten Inverter stellen sicher, daß auch ein Nicht-Treffer als Treffer ausgewertet werden kann.

Eine Erhöhung der Anpassungsfähigkeit ergibt sich weiterhin dadurch, daß die Inverter an den Treffer- und Leseausgängen der Assoziationsmatrix jeweils aus einem exklusiven ODER-Glied bestehen und daß die exklusiven ODER-Glieder abhängig von einem auf den jeweils zweiten Steuereingang einwirkenden Signal als einfacher Schalter oder Inverter arbeiten. Man ist also in einfacher Weise in der Lage, wahlweise Treffer oder auch Nicht-Treffer als Treffer zu werten.

Auch eine Einengung auf vorgegebene Bereiche im Basisspeicher ist möglich, wenn zwischen Register und Prioritätssteuerung jeweils eine steuerbare Maske angeordnet ist, wobei die Einstellung der Maske zur Auswertung der gelesenen Zeile mit der dem Suchargument vorgeschalteten Maske übereinstimmt.

Ein anderer Anwendungsfall betrifft das schnelle und sichere Sortieren mit wirtschaftlichem Aufwand auch bei größerer Speicherkapazität. Hierauf nehmen die Ansprüche 5 bis 15 Bezug, wobei die Ansprüche 5 bis 8 weitere Ausgestaltungen des Hybrid-Assoziativspeichers und die Ansprüche 9 bis 15 ein dadurch mögliches neues Sortierverfahren zum Gegenstand haben.

Die weiteren Ausgestaltungen des Hybrid-Assoziativspeichers beziehen sich darauf, daß wenigstens eine der gesonderten Speichereinheiten als Hilfsspeicher für die Zwischenspeicherung von durch Treffer der assoziativen Oberfläche gekennzeichneten Daten des Basisspeichers verwendet wird und daß mit der Trefferauswertesteuerung der assoziativen Oberfläche eine Steuereinrichtung zur Übertragung der bei Sortiervorgängen durch Treffer gekennzeichneten Daten in den Hilfsspeicher gekoppelt ist.

Damit können gemäß dem Verfahren nach Anspruch 9 die Daten in einem bzw. mehreren Suchläufen vorsortiert und in den Hilfsspeicher übernommen werden, aus dem sie dann durch die assoziative Oberfläche enfgültig aussortiert werden können, was bei Anwendung des durch die DE-PS 23 42 660 bekannten Verfahrens sehr viel schneller zum Ziel führt, da die Anzahl der erforderlichen Suchläufe durch den Basisspeicher bis zur Aussortierung eines Datums wesentlich verringert wird.

Es ist zwar durch die DE-PS 25 12 324 bereits bekannt, für das Sortieren einen Hilfsspeicher zu verwenden. Dieser ist aber nicht Bestandteil des Basisspeichers, auch werden in den Hilfsspeicher keine vorsortierten Daten übernommen.

Damit endgültig aussortierte Daten im Basisspeicher bei nachfolgenden Suchläufen nicht mehr erfaßt werden, ist zusätzlich eine Einrichtung zur Markierung von aussorten Daten vorgesehen.

Solange die einzelnen Gruppen von sortierfähigen Daten je Suchlauf annähernd gleich groß sind, genügt ein Hilfsspeicher mit entsprechend groß bemessener Speicherkapazität. Bei N Einträgen in der Datei und G Gruppen sind folglich mindestens N/G Speicherplätze im Hilfsspeicher erforderlich. Durch Überhöhung der Speicherkapazität lassen sich auch Streuungen bezüglich der Anzahl der Daten in den einzelnen Gruppen auffangen.

Schwankt dagegen die Anzahl der Daten je Gruppe stärker, so ist es vorteilhaft, wenn die Speicherkapazität des Hilfsspeichers nach Bedarf vergrößerbar ist, beispielsweise durch Zuschalten weiterer gesonderter Speichereinheiten im Basisspeicher, damit Überfüllungen nicht zur Blockierung des gesamten Sortiervorganges führen können.

Die Vergrößerung der Speicherkapazität des Hilfsspeichers über die einer Speichereinheit des Basisspeichers hinaus erfordert jedoch eine Endsortierung über mehrere Speichereinheiten und damit mehr Zeitaufwand. Die im Hilfsspeicher aufgesammelten Daten können jedoch unmittelbar nach Durchsuchen jeder Speichereinheit als aussortiert markiert werden, und zwar gleichzeitig.

Die Überfüllung des Hilfsspeichers während eines Suchlaufes durch alle Speichereinheiten des Basisspeichers bei fest vorgegebener Speicherkapazität und damit eine Blockierung des Sortiervorganges kann jedoch umgangen werden, wenn eine Einrichtung zur Überwachung des Füllungszustandes des Hilfsspeichers vorgesehen wird. Damit gekoppelte Einrichtungen zur Erweiterung des Suchargumentes und Einrichtungen zur Löschung von Daten im Hilfsspeicher und zur Kennzeichnung der freien Speicherplätze im Hilfsspeicher ermöglichen dann die Fortsetzung des eingeleiteten Sortiervorganges. Die nachträgliche Erweiterung des Suchargumentes und die Löschung der dem erweiterten Suchargument nicht mehr entsprechenden Daten im Hilfsspeicher hat nämlich die gleiche Wirkung, als ob dieses erweiterte Suchargument bereits vom Beginn des Suchlaufes an bestanden hätte.

Eine zweckmäßige Ergänzung des daraus resultierenden Verfahrens besteht darin, daß zu Beginn eines Suchvorganges das vorgegebene Suchargument durch Maskenabdeckung auf ein übergeordnetes, mehrere mögliche Gruppen von Daten erfassendes Suchargument reduziert wird und daß bei Gefahr des Überlaufs im Hilfsspeicher die Maskenabdeckung gegebenenfalls schrittweise wieder zurückgenommen wird und nicht zugehörige aufgesammelte Daten im Hilfsspeicher gelöscht werden. Auf diese Weise läßt sich vermeiden, daß während eines Suchlaufes der Hilfsspeicher fast oder ganz leer bleibt. Die Reduzierung des Suchargumentes über die Maske führt vielmehr zu einer anfänglich stärkeren Füllung des Hilfsspeichers, gegebenenfalls auch zu einer Überfüllung, die dann durch eine schrittweise erfolgende Änderung der Maske wieder abgebaut werden muß.

Da bei der Übernahme der Daten in den Hilfsspeicher mit fester Speicherkapazität noch nicht abzusehen ist, ob die Daten bis zur Endsortierung im Hilfsspeicher verbleiben, kann hierbei erst am Ende eines jeden Suchlaufes durch den Basisspeicher eine Markierung der aussortierten Daten erfolgen. Dies geschieht zweckmäßig in der Weise, daß jeweils nach Durchsuchen aller Speichereinheiten des Basisspeichers alle Daten im Basisspeicher anhand des jeweils zuletzt gültigen Suchargumentes erneut durchsucht und die durch einen Treffer der assoziativen Oberfläche gekennzeichneten Daten im Basisspeicher als aussortiert markiert werden. Auch in diesem Falle können alle zu markierenden Daten einer Speichereinheit gleichzeitig markiert werden.

Das jeweilige Such- bzw. Sortierargument wird zweckmäßig von einem Sortierbitmuster-Generator geliefert, der abhängig vom jeweiligen Such- bzw. Sortierergebnis steuerbar ist.

Einzelheiten der Erfindung seien nachfolgend anhand der Zeichnungen näher erläutert. Im einzelnen zeigen :

Figur 1 den schematischen Aufbau eines Hybrid-Assoziativspeichers gemäß der Erfindung,

Figur 2 die Ausgestaltung der Assoziationsmatrix zur Ermittlung der Adresse freier Speichereinheiten im Basisspeicher,

Figur 3 das Blockschaltbild eines Hybrid-Assoziativspeichers in Anlehnung an Fig. 1 mit den Zusatzeinrichtungen zur Durchführung der Sortierverfahren gemäß der Erfindung in schematischer Darstellung,

Figur 4 die schematische Darstellung des Suchablaufes nach dem einen Verfahren gemäß der Erfindung,

Figur 5 das Änderungsschema für das Sortierbitmuster beim Suchen und Sortieren,

Figur 6 eine Tabelle für den Ablauf der Endsortierung bei Verwendung des Sortieralgorithmus nach Fig. 5 in Anlehnung an das Beispiel von Fig. 4,

Figur 7 die schematische Darstellung des Such- und Sortierablaufes bei Verwendung eines Hilfsspeichers mit dester Speicherkapazität gemäß dem zweiten Verfahren der Erfindung und

Figur 8 ein ausführlicheres Blockschaltbild in Anlehnung an das von Fig. 3.

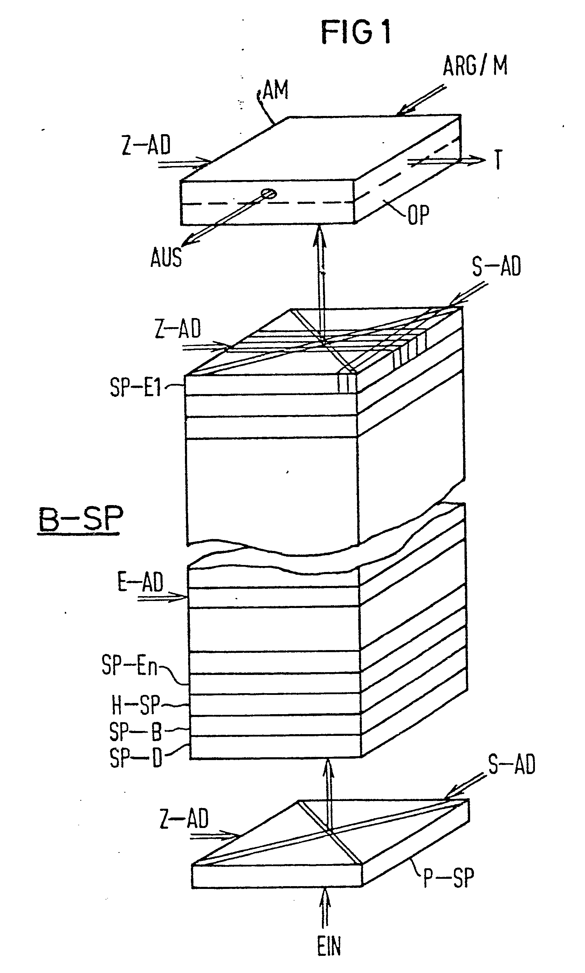

Fig. 1 zeigt den schematischen Aufbau eines an sich bekannten Hybrid-Assoziativspeichers, bestehend aus einem Basisspeicher B-SP, einer als Oberflächenpuffer OP wirkenden Speichereinheit und einer Assoziationsmatrix AM.

Zusätzlich kann ein Pufferspeicher P-SP für die Eingabe in den Basisspeicher B-SP vorgesehen sein.

Die Assoziationsmatrix besteht in an sich bekannter Weise aus Gruppen zeilenweise angeordneter Vergleicher für jeweils ein Bit, die zeilenweise gelesen werden können bzw. spaltenweise über die gesamte Zeilenbreite beliebig maskierbar sind. Dabei wird be jeder Ansteuerung ein durch eine Maske freigebenes Bit des Suchargumentes mit einem Datenbit aus dem Basisspeicher verglichen. Stimmen alle innerhalb einer Zeile miteinander verglichenen Bits überein, so wird ein Treffer gemeldet und die zugehörige Zeile ausgelesen. Der Aufbau derartiger Assoziationsmatrizen ist allgemein bekannt. In der Zeichnung wurde daher auf die Darstellung der zusätzlich benötigten Bauteile verzichtet und stattdessen nur Pfeile eingesetzt, die auf diese Bauteile hinweisen. Es handelt sich dabei um die Zeilenauswahl anhand einer Zeilenadresse Z-AD, die Bereitstellung des Suchargumentes ARG und die Maskierung M, sowie die Auswertung der Treffer T und die Ausgabe AUS für die Daten einer Zeile.

Die Assoziationsmatric AM besteht beispielsweise aus 32 Zeilen mit jeweils 8 Byte zu je 8 Bit, so daß insgesamt 256 Byte oder 2 048 Bit assoziativ erfaßt werden. Diese Bit müssen alle gleichzeitig der Assoziationsmatrix AM aus dem Basisspeicher B-SP zur Verfügung gestellt werden.

Mit der Assoziationsmatrix ist eine entsprechend organisierte Speichereinheit als Oberflächenpuffer OP für entsprechend viele Datenbit gekoppelt, der zusammen mit der Assoziationsmatrix AM wie ein konventioneller Assoziativspeicher arbeitet, allerdings mit dem Unterschied, daß ein paralleler Zugang zu allen einzelnen Speicherzeilen vorgesehen ist. Assoziationsmatrix AM und Oberflächenpuffer OP lassen sich integriert durch eine Reihe gleichartiger LSI-Bausteine, beispielsweise für jeweils sechzehn assoziativ Bitstellen, realisieren.

Neben der assoziativen Oberfläche, bestehend aus der Assoziationsmatrix AM und dem Oberflächenpuffer OP, ist der Basisspeicher B-SP wesentlicher Bestandteil des Hybrid-Assoziativspeichers. Dieser Basisspeicher gliedert sich in eine Vielzahl von in Etagen übereinander geschichteten Speichereinheiten SP-E1 bis SP-En, die jeweils analog dem Oberflächenpuffer OP der assoziativen Oberfläche organisiert sind, d. h. diese Speichereinheiten weisen bei gleicher matrixförmiger Anordnung je Bit einen Speicherabschnitt auf, so daß jeweils ein Speicherabschnitt in jeder Speichereinheit SP-E... miteinander korrespondiert und alle diese miteinander korrespondierenden Speicherabschnitte zum selben Assoziationsfeld der assoziativen Oberfläche durchschaltbar sind.

Zusätzlich zu den Speichereinheiten SP-E1 bis SP-En sind im Basisspeicher B-SP in Auswirkung der Erfindung zusätzliche Speichereinheiten, nämlich H-SP, SP-B und SP-D vorgesehen. Diese zusätzlichen Speichereinheiten sind wie die übrigen Speichereinheiten SP-E... organisiert und in gleicher Weise Bestandteil des Basisspeichers B-SP.

Den vielfältigen Betriebsbedingungen des Assoziativspeichers entsprechend sind mit dem Basisspeicher B-SP Auswahlschaltmittel zur Auswahl jeweils einer der Speichereinheiten SP-E... sowie H-SP, SP-B und SP-D, für die einzelnen Zeilen und auch für die einzelnen Spalten innerhalb jeder Speichereinheit vorgesehen. Derartige Auswahlschaltmittel in Verbindung mit dreidimensionalen Speichern sind allgemein bekannt und daher nicht gesondert dargestellt. Stattdessen sind die dadurch gegebenen Auswahlmöglichkeiten lediglich durch Adressenpfeile angedeutet, nämlich für die Speichereinheiten die Auswahl durch die Adresse E-AD, für die Zeilen durch die Adresse Z-AD und für die Spalten durch die Adresse S-AD.

Anstelle eines einzigen dreidimensionalen Speicherblockes als Basisspeicher B-SP können entsprechend einem anderen Erfindungsvorschlag EP-A-36 148 mehrere dreidimensionale Speicherblöcke als Teilspeicher des Basisspeichers vorgesehen werden, die dann zyklisch umlaufend über eine gesonderte Durchschalteeinrichtung mit der gemeinsamen assoziativen Oberfläche verbunden werden. In diesem Falle können die zusätzlichen Speichereinheiten auch auf verschiedene Teilspeicher des Basisspeichers verteilt werden. Assoziationsvorgänge durch die Assoziationsmatrix AM werden durch fortlaufende Auswahl von Speichereinheiten SP-E... anhand der Adressen E-AD zur Kennzeichnung der jeweiligen Speichereinheit sowie durch Übergabe der in den gelesenen Speichereinheiten enthaltenen Daten in den Oberflächenpuffer OP der assoziativen Oberfläche abgewickelt. In analoger Weise erfolgt auch das gezielte Lesen von Daten aus dem Basisspeicher B-SP, in dem zunächst die zugehörige Speichereinheit SP-E... adressiert und der assoziativen Oberfläche zur Verfügung gestellt wird und in dem dann anhand der eingestellten Zeilenadresse Z-AD unter Ausschaltung des Assoziationsvorganges die Daten der ausgewählten Zeile ausgelesen werden.

Die Dateneingabe in den Basisspeicher B-SP kann dagegen unabhängig von der assoziativen Oberfläche über den Pufferspeicher PSP erfolgen. Dabei sind zwei Einzelfälle zu unterscheiden, nämlich das Einspeichern von Daten für eine gesamte Speichereinheit oder aber nur für eine einzige Zeile bzw. Spalte innerhalb einer Speichereinheit, was wiederum durch Adressenpfeile Z-AD bzw. S-AD angedeutet ist. Dabei werden die Daten zunächst zeilen- bzw. spaltenweise übernommen und gegebenenfalls erst dann in die zugehörige Speichereinheit übertragen, wenn der Pufferspeicher P-SP gefüllt ist. Das Aufsammeln der Daten im Pufferspeicher hat den Vorteil, daß nicht alle Zeilen bzw. Spalten von Daten an den Basisspeicher B-SP einzeln übergeben werden müssen und damit unnötig Arbeitszyklen des Basisspeichers für die Eingabe verbraucht werden. Auch können bereits Daten zur Übergabe in den Basisspeicher aufgesammelt werden, wenn der Basisspeicher infolge Zusammenarbeit mit der assoziativen Oberfläche noch nicht zur Verfügung steht.

Die zusätzlichen Speichereinheiten H-SP, SP-B und SP-D, die gleichfalls Bestandteil des Basisspeichers B-SP sind, können für unterschiedliche Zwecke verwendet werden. Die Speichereinheit SP-B wird beispielsweise für die Zuweisung und Auswahl einer freien Speichereinheit der Speichereinheiten SP-E1 bis SP-En verwendet, beispielsweise in der Weise, daß jeder der Speichereinheiten SP-E... ein Speicherabschnitt oder Speicherbit innerhalb der Speichereinheit SP-B zugeordnet ist, um ein Belegungskennzeichen B aufzunehmen, das anzeigt, ob die zugehörige Speichereinheit vollständig frei oder mit wenigstens einem Eintrag belegt ist. Das Belegungskennzeichen B kann daher aus einer 0 für eine freie Speichereinheit und aus einer 1 für eine belegte Speichereinheit bestehen. Zur Feststellung, welche Speichereinheit noch frei ist, wird die Speichereinheit SP-B anhand der zugehörigen Adresse E-AD ausgewählt und zur assoziativen Oberfläche durchgeschaltet.

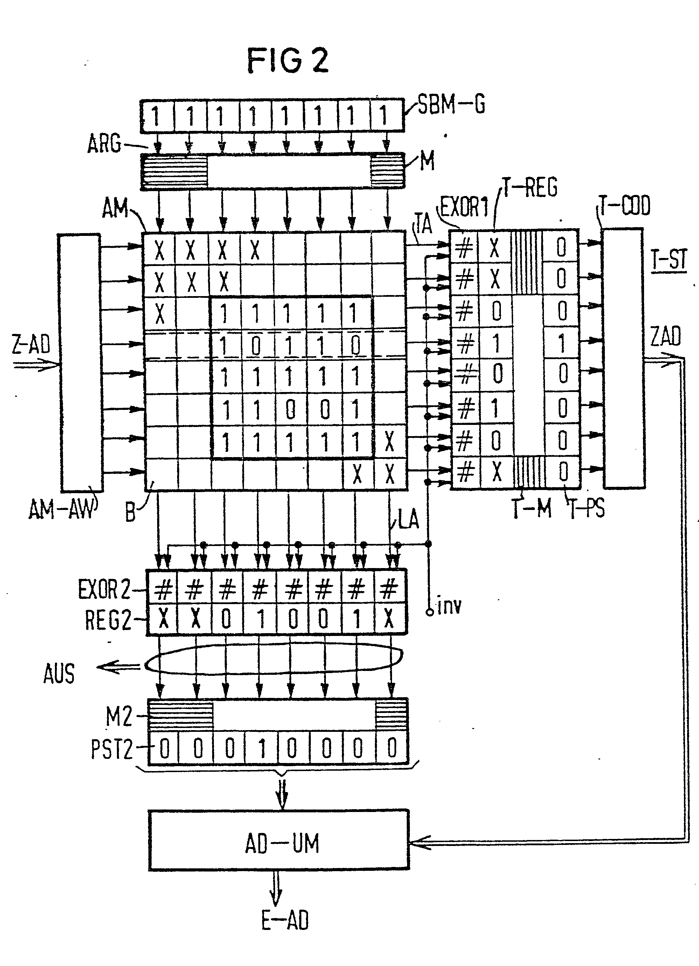

Die nachfolgende Auswertung der Einträge in der Speichereinheit SP-B sei an Fig. 2 erläutert.

Diese Figur zeigt im Mittelpunkt die Assoziationsmatrix mit den einzelnen Assoziationsfeldern, die jeweils eines der Belegungskennzeichen B auswerten. Gezeigt sind weiterhin die zugehörige Zeilenauswahlschaltung AM-AW zum Auslesen der jeweils durch die Adresse Z-AD gekennzeichneten Matrixzeile, der Generator SBM-G für die Bereitstellung des Suchargumentes ARG und die zugehörige Maske M sowie die mit den Trefferausgängen TA der Assoziationsmatrix AM verbundene Trefferauswertesteuerung T-ST.

Diese Trefferauswertesteuerung T-ST besteht in an sich bekannter Weise aus einem Trefferregister T-REG zur Zwischenspeicherung der bei einem Assoziationsvorgang angezeigten Treffer, einer Treffer-Prioritätssteuerung T-PST, um nach einer vorgegebenen Priorität angezeigte Treffer auswählen zu können, und einem nachgeschalteten Codierer T-COD zur Umwandlung des priorisierten Treffers in die Zeilenadresse Z-AD, die dann in an sich bekannter Weise der Auswahlschaltung AM-AW zugeleitet wird, wenn die zugehörige Zeile über den Ausgang AUS ausgelesen werden soll.

In Auswirkung der in diesem Zusammenhang beschriebenen Weiterbildung der Erfindung ist jeder Stufe des Trefferregisters T-REG ein exklusives ODER-Glied vorgeschaltet die gemeinsam mit EXOR1 bezeichnet sind. Außerdem ist zwischen dem Trefferregister T-REG und der Prioritätssteuerung P-PST eine variabel einstellbare Maske T-M angeordnet.

Darüber hinaus sind die Leseausgänge LA der Assoziationsmatrix AM mit einer ähnlich aufgebauten Anordnung verbunden. Diese Anordnung besteht aus dem Register REG2 mit einer der Anzahl der Leseausgänge LA entsprechenden Anzahl von Stufen, wobei jeder Stufe ebenfalls ein exklusives ODER-Glied vorgeschaltet ist, die gemeinsam mit EXOR2 bezeichnet sind. Die Ausgänge der einzelnen Stufen des Registers REG2, die zugleich gemeinsam den Leseausgang AUS der Assoziationsmatrix AM bilden können, sind des weiteren mit einer Prioritätssteuerung PST2 verbunden, der ebenfalls eine variabel einstellbare Maske M2 vorgeschaltet ist. Diese Prioritätssteuerung liefert wie die Prioritätssteuerung T-PST der Trefferauswertesteuerung T-ST die Adresse einer priorisierten Spalte, für die ein Treffer vorliegt. Die Adressen beider Prioritätssteuerungen T-PST und PST2 werden einer Adressenumsetzeinrichtung AD-UM als Koordinatenadressen zugeleitet, aus denen dann in an sich bekannter Weise die Adresse E-AD für die als frei erkannte Speichereinheit SP-E... ermittelt wird.

Die exklusiven ODER-Glieder EXOR1 bzw. EXOR2 weisen neben den mit den Trefferausgängen TA bzw. den Leseausgängen LA verbundenen Eingängen in an sich bekannter Weise einen zweiten Eingang auf, wobei diese zweiten Eingänge parallel von einem Signal inv beaufschlagt werden können. Ist dieses Signal eine 0, so wirken die exklusiven ODER-Glieder wie ein normaler Schalter, d. h. das über die Trefferausgänge TA bzw. Leseausgänge LA zugeführte Signal wird unverändert zu den nachgeschalteten Registerstufen weitergeleitet. Ist dagegen das Signal eine 1, so wirken die exklusiven ODER-Glieder wie Inverter, und die von den Trefferausgängen TA bzw. Leseausgängen LA gelieferten Signale werden invertiert. Auf diese Weise besteht die Möglichkeit, sowohl Treffer als auch Nicht-Treffer als Treffer zu werten. Die weiterhin vorgesehenen Masken dienen dazu, den Bereich im Basisspeicher B-SP einzuengen, aus dem die freie Speichereinrichtung SP-E... auszuwählen ist. Die Maske M für die Auswahl des wirksamen Teiles des vom Generator SBM-G zur Verfügung gestellten Suchargumentes ARG und die Maske M2 werden für die Spaltenauswahl immer gleichlaufend eingestellt. Die Maske T-M bewirkt die Einschränkung des Zeilenbereichs. Bei den gezeigten Maskeneinstellungen wird lediglich das innerhalb der Assoziationsmatrix AM stark umrandete Feld überprüft.

Für die Auswahl einer freien Speichereinheit wird beispielsweise das Suchargument 1...1 verwendet, wenn alle mit wenigstens einem Eintrag belegten Speichereinheiten durch eine 1 gekennzeichnet sind. In diesem Falle liefern alle Zeilen mit einer 0 für eine freie nicht belegte Speichereinheit keinen Treffer. Da jedoch diese Zeilen als Treffer gewertet werden müssen, werden die exklusiven ODER-Glieder EXOR1 und EXOR2 durch eine 1 am Eingang inv auf Inverterbetrieb geschaltet. Die daraus resultierenden Trefferergebnisse sind in den einzelnen Stufen der Register T-REG und REG2 wiedergegeben. Innerhalb des durch die Masken T-M und M2 ausgewählten Bereiches ermitteln dann die nachgeschalteten Prioritätssteuerungen T-PST und PST2 jeweils die Nicht-Treffer-Zeile bzw. -spalte mit der höchsten Priorität, so daß aus den so gewonnenen Koordinatenwerten durch die Einrichtung AD-UM die zugehörige Adresse E-AD für die gefundene Speichereinheit SP-E... ermittelt werden kann. Für den normalen Betrieb wird dagegen der Eingang inv mit einer 0 beaufschlagt, so daß in bekannter Weise nur echte Treffer als Treffer gewertet werden.

Neben dem gezeigten Ausführungsbeispiel im Rahmen der Speicherbewirtschaftung können die zusätzlichen Speichereinrichtungen für verschiedene bekannte Anwendungsfälle verwendet werden. So dient beispielsweise die in Fig. 1 gezeigte zusätzliche Speichereinheit SP-D zur Speicherung von Parameterlisten für Kettungen von Daten im Bereich der Speichereinheit SP-E1 bis SP-En und die zusätzliche Speichereinheit H-SP als Hilfsspeicher zum Sortieren von in den Speichereinheiten SP-E1 bis SPEn enthaltenen Daten einer Datei.

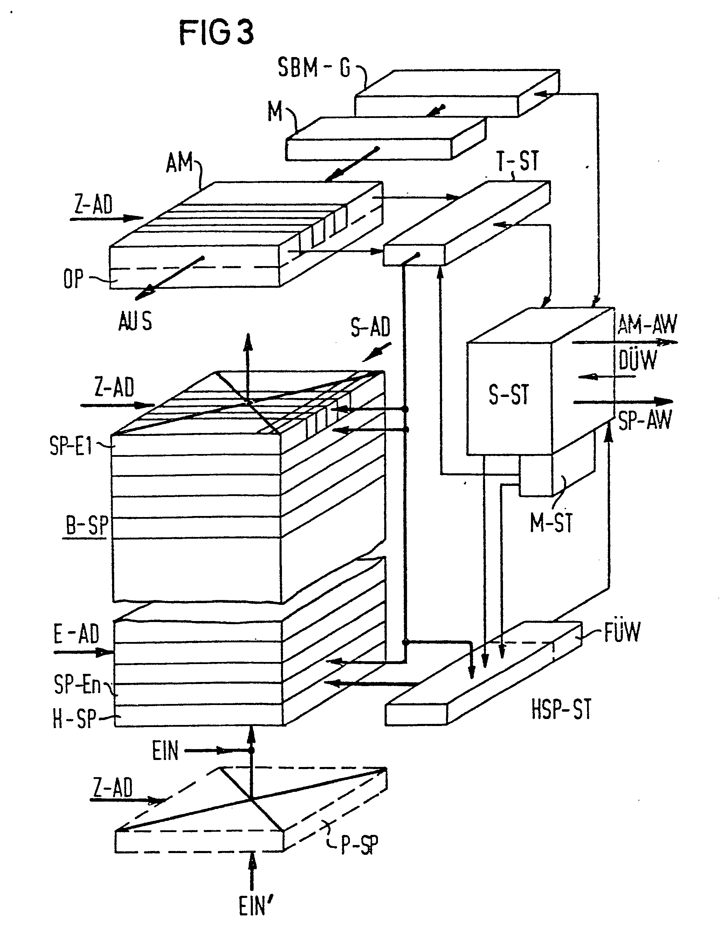

Mit Bezug auf den zuletzt genannten Anwendungsfall zeigt Fig. 3 in Anlehnung an Fig. 1 einen durch Zusatzeinrichtungen ergänzten Hybrid-Assoziativspeicher, bei dem die Assoziationsmatrix AM mit einer Einrichtung SBM-G zur Bereitstellung des jeweiligen Suacharguamentes und einer Maske M sowie einer Trefferauswertesteuerung T-ST gekoppelt ist. Weiterhin sind in Auswirkung der Erfindung die Steuereinrichtung S-ST zur Übertragung der durch Treffer gekennzeichneten Daten in den Hilfsspeichern, die Einrichtung M-ST zur Markierung der jeweils endgültig aussortierten Daten in den einzelnen Speichereinheiten des Basisspeichers B-SP, eine Einrichtung HSP-ST zur Löschung von Daten im Hilfsspeicher H-SP und zur Kennzeichnung freier Speicherplätze sowie eine Einrichtung FÜW zur Überwachung des Füllungszustandes des Hilfspeichers H-SP gezeigt. Zusätzlich kann ein Eingabepufferspeicher P-SP, wie gestrichelt angedeutet, vorgesehen sein.

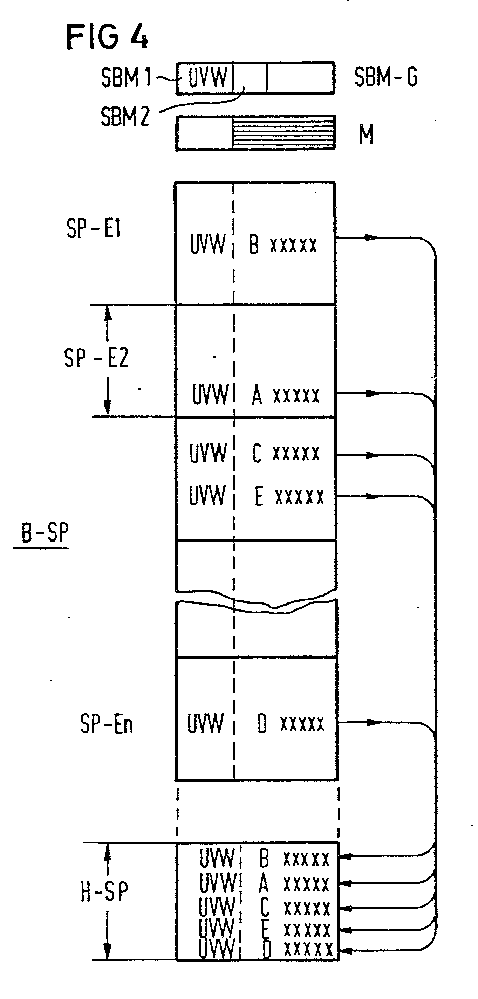

Bevor auf die Arbeitsweise der in Fig. 3 dargestellten Anordnung zum Sortieren von im Basisspeicher B-SP gespeicherten Daten näher eingegangen wird, sei zunächst das den Sortierverfahren gemäß der Erfindung zugrundeliegende Prinzip näher erläutert. Fig. 4 zeigt zu diesem Zweck eine Reihe von Dateneinträgen im Basisspeicher B-SP, die wahllos auf die einzelnen Speichereinheiten SP-E1 bis SP-En verteilt sind. Diese Daten gehören alle zur selben Gruppe mit dem übereinstimmenden assoziativen Bestandteil UVW und einem durch die Buchstaben A bis D gekennzeichneten Zeichenbestandteil, der für die Sortierung innerhalb der Gruppe maßgebend ist. Oberhalb der gezeigten Datenliste ist symbolisch der Sortierbitmustergenerator SBM-G und die Maske M angedeutet. Von dem im Sortierbitmustergenerator SBM-G jeweils zur Verfügung stehenden Suchargument sind für den Sortiervorgang nur Teile erforderlich, die mit SBM1 und SBM2 bezeichnet sind. Das Muster SBM1 kennzeichnet die Gruppe von Daten aus einer Vielzahl von Gruppen, die zu sortieren sind. Im vorliegenden Falle ist im Musterfeld SBM1 das Gruppenkennzeichen UVW eingestellt und die Maske gibt für den assoziativen Suchlauf durch die einzelnen Speichereinheiten SP-E... des Basisspeichers B-SP lediglich diesen Ausschnitt des Suchargumentes frei. Mit Beginn des Suchlaufes werden die einzelnen Speichereinheiten SP-E... zyklisch nacheinander zur assoziativen Oberfläche durchgeschaltet und die gespeicherten Daten anhand des Suchargumentes überprüft. Meldet die Trefferauswertesteuerung einen Treffer, so wird das durch den Treffer gekennzeichnete Wort in den ganz unten liegenden Hilfsspeicher H-SP in an sich bekannter Weise übertragen, was durch die Flußpfeile auf der rechten Seite der Datentabelle angedeutet ist. Sobald alle Speichereinheiten SP-E1 bis SP-En überprüft sind, befinden sich alle Daten der überprüften Gruppe im Hilfsspeicher H-SP, und zwar in der Reihenfolge, mit der sie aus den Speichereinheiten des Basisspeichers übernommen worden sind. Die Daten im Hilfsspeicher H-SP sind daher in der Regel noch unsortiert und müssen in einem zweiten Arbeitslauf noch sortiert werden. Zu diesem Zweck wird jetzt die den Hilfsspeicher H-SP bildende Speichereinheit mit der assoziativen Oberfläche verbunden und anhand der Maske M das Musterfeld SEM2 im Suchargument wirksam geschaltet und der Suchbitmuster-Generator stellt in diesem Musterfeld entsprechend der vorzunehmenden Sortierreihenfolge die einzelnen Suchargumente der Reihe nach zur Verfügung, einzelnen Suchargumente der Reihe nach zur Verfügung, beim gewählten Ausführungsbeispiel in alphabetischer Reihenfolge beginnend mit dem Suchargument A, so daß bei der ersten Überprüfung der an zweiter Stelle im Hilfsspeicher H-SP liegende Eintrag als erster ausgegeben wird. Danach wird das zweite Suchargument B eingestellt und beim zweiten Prüfvorgang der Eintrag der ersten Zeile des Hilfsspeichers H-SP ausgelesen usw...

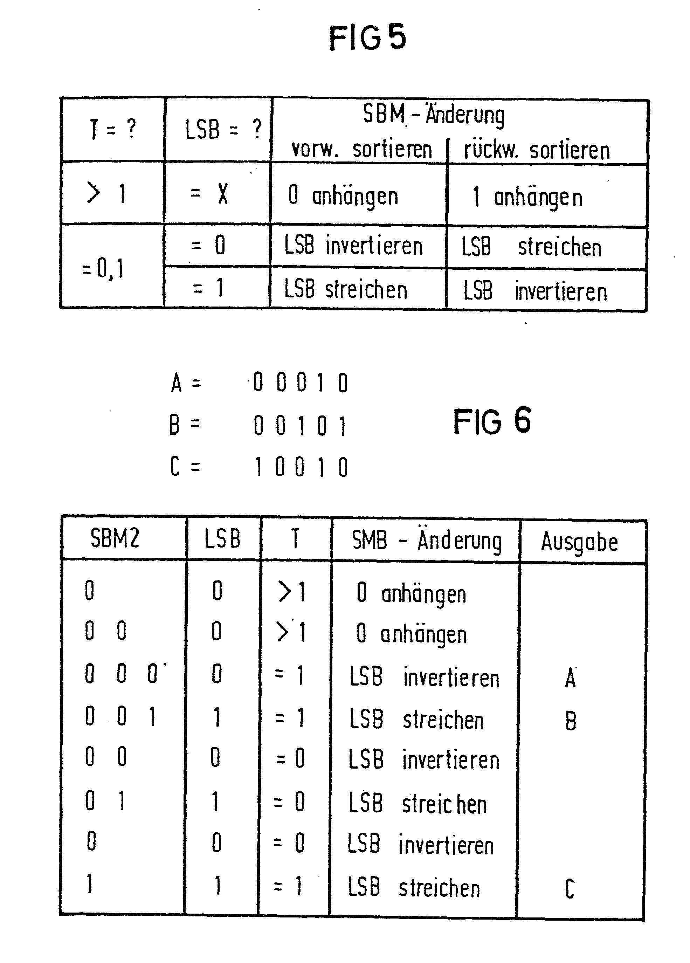

Allgemein werden die einzelnen Sortierbitmuster SEM in Form von mehrstelligen Binarzeichen zur Verfügung gestellt, deren Stellenzahl abhängig vom Sortierergebnis durch die Maske M variierbar und deren Werte durch einen Zähler fortschreibbar sind. Ein ent-sprechend arbeitendes Sortierverfahren ist bei-spielsweise in der bereits genannten DE-PS 23 42 660 ausführlich beschrieben. Fig. 5 zeigt den zugehörigen Sortieralgorithmus in Form einer Tabelle, wobei die Änderung des jeweils vorliegenden Sortierbitmusters SBM vor Einleiten der jeweils nächsten Prüfung abhängig von der Art der Treffer T und der Art des letzten signifikanten Bits LSB des Sortierbitmusters ist. Insgesamt sind zwei Trefferfälle zu unterscheiden, nämlich mehr als ein Treffer und kein bzw. ein Treffer. Für den Fall, daß mehrere Treffer gleichzeitig vorliegen, ist das letzte signifikante Bit LSB ohne Bedeutung. In jedem Falle wird das zuletzt maßgebende Suchbitmuster SBM durch Öffnen der Maske um eine weitere Bitstelle durch Anhängen einer 0 beim Vorwärtssortieren oder durch Anhängen einer 1 beim Rückwärtssortieren erweitert. Bei den übrigen Trefferfällen, kein Treffer oder ein Treffer, ist zusätzlich das letzte signifikante Bit LSB maßgebend. Ist dies eine 0, so wird diese beim Vorwärtssortieren durch Invertieren zu einer 1 oder beim Rückwärtssortieren durch Einengen der Maske einfach gestrichen. Ist das letzte signifikante Bit LSB dagegen eine 1, so wird diese beim Vorwärtssortieren gestrichen oder aber beim Rückwärtssortieren durch Invertieren zu einer 0.

Fig. 6 zeigt den Ablauf eines entsprechenden Sortiervorganges für drei Daten A, B und C in Form einer Tabelle mit den Spalten SBM2 für das jeweils wirksame Sortierbitmuster, das letzte signifikante Bit LSB, die Art der Treffer T, die vorzunehmende Änderung des Sortierbitmusters SMB und schließlich die Ausgabe der Daten in sortierter Reihenfolge.

Zu Beginn eines Sortiervorganges wird der Sortierbitmusterzähler in der Regel auf 0...0 gestellt und alle Bitstellen bis auf die höchstwertigste durch die Maske abgedeckt, um so möglichst schnell zu Treffern zu kommen. Bei den als Beispiel gewählten, zu sortierenden drei Daten A, B und C führt ein derartiges Suchargument zu einer Mehrfachtrefferanzeige. Das Sortierbitmuster ist daher durch Anhängen einer 0 zu erweitern. Bei der nächsten Überprüfung wird gleichfalls ein Mehrfachtreffer angezeigt und durch Öffnen der Maske eine weitere 0 angehängt. Die dritte Prüfung zeigt einen einzigen Treffer an, und zwar für den Eintrag A, der ausgegeben werden kann. Nachfolgend wird die 0 an letzter Stelle invertiert und damit in eine 1 abgeändert, so daß bei der nächsten Prüfung wiederum ein Treffer erzielt wird und diesmal der Eintrag B ausgegeben werden kann. Da das letzte signifikante Bit LSB eine 1 war, wird durch Einengen der Maske eine Stelle wieder gestrichen. Die darauffolgende Prüfung ergibt keinen Treffer, und das letzte signifikante Bit wird in eine 1 abgewandelt! Da auch die nachfolgende Überprüfung keinen Treffer ergibt, wird wiederum durch Einengen der Maske das letzte wirksame Bit gestrichen, so daß das wirksame Sortierbitmuster SBM2 aus einer einzigen 0 an der höchsten Stelle besteht. Auch dabei führt die Prüfung zu keinem Treffer, so daß diese 0 zu einer 1 invertiert wird, was dann zu einem Treffer für den letzten Eintrag C führt.

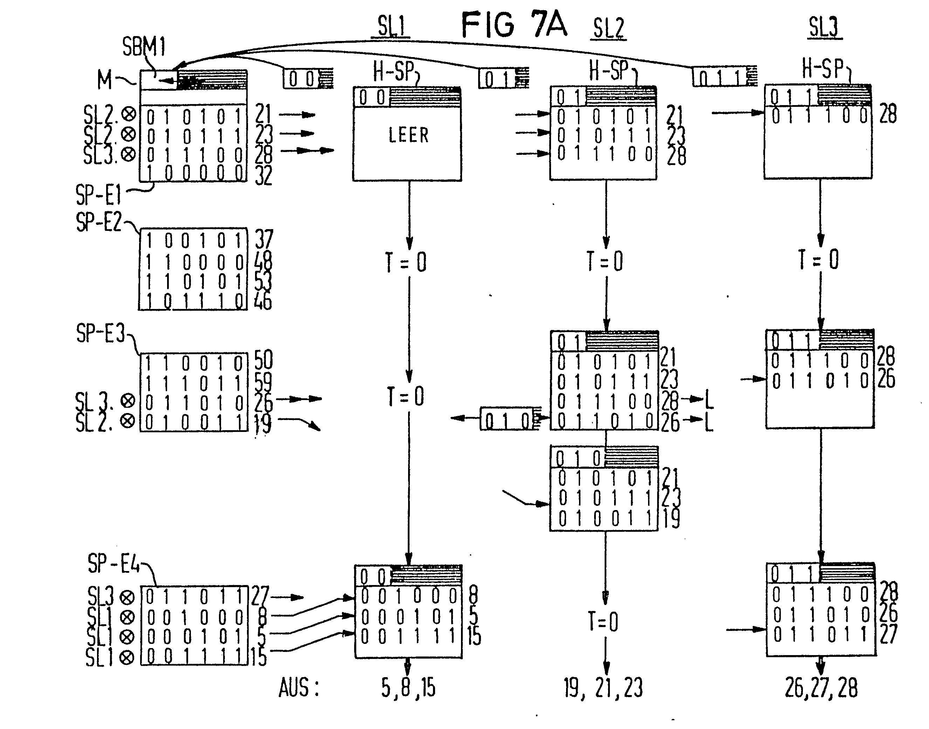

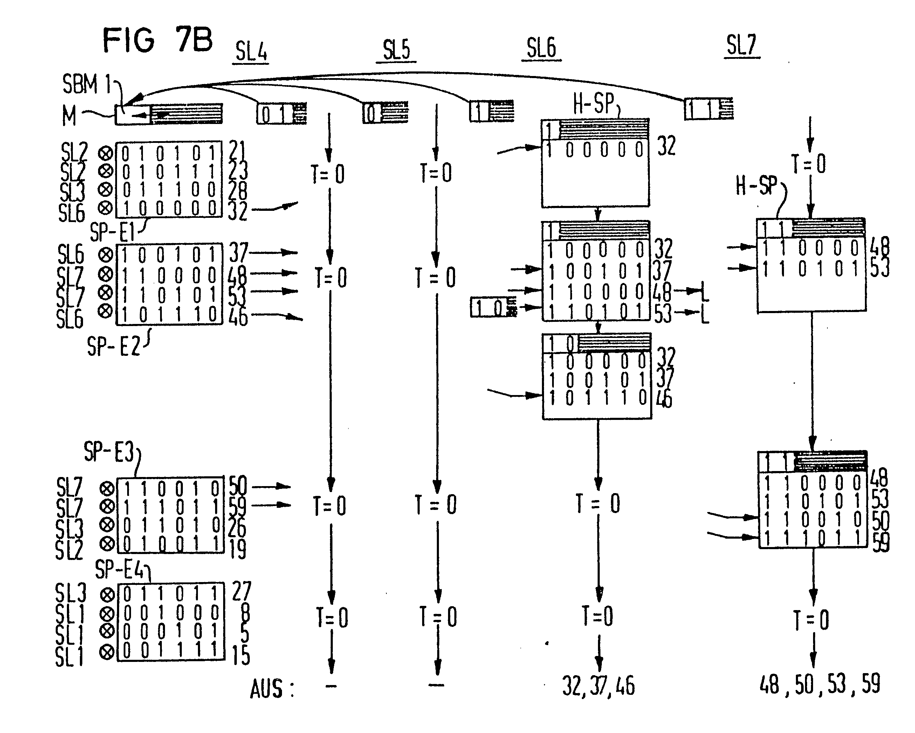

Das anhand von Fig. 5 und Fig. 6 beschriebene Sortierverfahren ist in analoger Weise auch auf das Sortierbitmuster SBM1 für die einzelnen Suchläufe zur Bildung der einzelnen Gruppen von zusammensortierfähigen Daten anzuwenden. Fig. 7A und 7B zeigen in schematischer Darstellung den vollständigen Ablauf des kombinierten Such- und Sortiervorganges bei Verwendung eines Hilfsspeichers mit fester Speicherkapazität. In beiden Teilfiguren ist in der linken Spalte die Belegung von vier Speichereinheiten SP-E1 bis SP-E4 mit jeweils vier Einträgen dargestellt, die zusammen eine Datei bilden, die entsprechend ihren Wertigkeiten sortiert werden sollen. Die Einträge zeigen jeweils die Form von Binärwerten, deren Äquivalente im dekadischen Zahlensystem jeweils rechts daneben angegeben sind. Oberhalb der Einträge ist die Maske M für die Assoziationsmatrix mit dem jeweils freigegebenen Suchbitmusterfeld SBM1 dargestellt. Rechts im Anschluß der sich auf die einzelnen Speichereinheiten SP-E1 bis SP-E4 beziehenden Spalten folgen den einzelnen Suchläufen SL1 bis SL7 entsprechende Spalten, die im Kopf jeweils das für den Suchlauf gültige Sortierbitmuster und die Belegung des Hilfsspeichers H-SP bei der Überprüfung der einzelnen Speichereinheiten SP-E1 bis SP-E4 zeigen.

Der erste Suchlauf SL1 beginnt mit dem Sortierbitmuster 00. Der Speicher H-SP ist zunächst leer. Bei der Überprüfung der Einträge in der Speichereinheit SP-E1 wird kein Treffer festgestellt, der Speicher bleibt also leer. Analoges gilt für die Überprüfung der Speichereinheiten SP-E2 und SP-E3. Lediglich bei der Überprüfung der Speichereinheit SP-E4 ergeben sich drei Treffer bezüglich der Zeilen 2 bis 4, die in den Hilfsspeicher H-SP übernommen werden. Danach Überprüfen aller vier Speichereinheiten ein Suchlauf abgeschlossen ist, können die im Hilfsspeicher H-SP während des Suchlaufes gesammelten Daten sortiert und ausgegeben werden, was in der untersten Zeile AUS durch Angabe der Äquivalente im dekadischen Zahlensystem angedeutet ist.

Für den zweiten Suchlauf SL2 wird das Sortierbitmuster SBM1 von 00 auf 01 zur Kennzeichnung einer weiteren Gruppe von zusammen sortierfähigen Daten abgewandelt. Bei der darauffolgenden Überprüfung der Speichereinheit SPE1 ergeben sich dann anhand des neuen Suchargumentes drei Treffer, so daß die zugehörigen Daten in den Hilfsspeicher H-SP übernommen werden, während die nachfolgende Überprüfung der Speichereinheit SP-E2 keinen weiteren Eintrag liefert. Erst die Überprüfung der Speichereinheit SP-E3 führt zu weiteren Einträgen im Hilfsspeicher H-SP. Dabei wird festgestellt, daß nach Übernahme des ersten Eintrags aus dieser Speichereinheit der Hilfsspeicher H-SP gefüllt ist, und daher keine weiteren Einträge mehr übernommen werden können, obwohl noch ein weiterer Treffer angezeigt wird.

Damit nun der gesamte Sortiervorgang nicht blockiert wird, wird entsprechend dem vorangehend beschriebenen Such- und Sortieralgorithmus das Suchbitmuster SBM1 um eine Stelle durch Anhängen einer 0 erweitert, was links vom Hilfsspeicher H-SP in Höhe der Zeile der Speichereinheit SP-E3 angedeutet ist, die nicht mehr in den Hilfsspeicher übernommen werden konnte. Anschließend wird nunmehr der Hilfsspeicher anhand des neuen Suchargumentes überprüft und alle dem neuen Suchargument nicht mehr entsprechenden Daten gelöscht, die durch L am rechten Rand des Hilfsspeichers H-SP gekennzeichnet sind. Nach der Überprüfung des Hilfsspeichers bleiben von den vorhergehenden vier Einträgen lediglich zwei Einträge übrig, so daß nunmehr Platz für weitere Einträge besteht. Das zwischenzeitliche Überprüfen des Hilfsspeichers nach dessen Füllung mit dem neuen Suchargument hat die gleiche Wirkung, als wenn dieses Suchargument bereits zu Beginn des Suchlaufes wirksam gewesen wäre.

Danach wird die Suche mit der Speicherzeile fortgesetzt, die zuvor wegen Füllung des Hilfsspeichers nicht mehr in den Hilfsspeicher übernommen werden konnte. Im vorliegenden Falle ist das die Zeile 4 der Speichereinheit SP-E3. Da der entsprechende Eintrag dem neuen Suchargument entspricht, wird dieser Eintrag nunmehr an dritter Stelle in den Hilfsspeicher H-SP übernommen. Weitere Einträge erfolgen während des Rest des Suchlaufes SL2 nicht mehr, so daß am Ende die Einträge entsprechend den Werten 19, 21 und 13 sortiert ausgegeben werden können.

Beim nächstfolgenden Suchlauf SL3 wird das zuletzt gültige Suchargument durch Invertieren des letzten signifikanten Bits zu 011 abgeändert. Der damit durchgeführte Suchlauf führt bei der Überprüfung der Speichereinheit SP-E1 zu einem ersten Eintrag im Hilfsspeicher H-SP, bei der Überprüfung der Speichereinheit SP-E3 zu einem zweiten Eintrag und bei der Überprüfung der Speichereinheit SP-E4 zu einem dritten Eintrag, so daß die aufgesammelten Einträge entsprechend den Werten 26, 27 und 28 endgültig aussortiert werden können.

Insgesamt sind somit nach drei Suchläufen neun der insgesamt sechzehn die Datei bildenden Einträge sortiert ausgespeichert worden. Zusätzlich ist zu bemerken, daß jeder endgültig aussortierte Eintrag im Basisspeicher als bereits aussortiert markiert wird, damit bei einem eingeengten Suchargument bereits aussortierte Einträge nicht nochmals erfaßt werden. Diese Markierung ist links von den einzelnen Einträgen in den einzelnen Speichereinheiten SP-E1 bis SP-E4 durch ein Kreuz im Kreis angedeutet, wobei gleichzeitig der Suchlauf angegeben ist, bei dem die Aussortierung erfolgte. Nach Abschluß des dritten Suchlaufes SL3 sind also von der Speichereinheit SP-E1 der vierte Eintrag von der Speichereinheit SP-E2 alle Einträge und von der Speichereinheit SP-E3 die ersten beiden Einträge noch nicht aussortiert.

Fig. 7B zeigt die Fortsetzung des Suchvorganges mit dem Suchlauf SL4 anhand des Suchbitmusters 01 und mit dem Suchlauf SL5 anhand des Suchbitmusters 0, die jedoch ohne Ergebnis bleiben. Der Suchlauf SL6 startet mit dem Suchbitmuster 1. Dies führt bei der Überprüfung der Speichereinheit SP-E1 zu einem Eintrag und bei der Überprüfung der Speichereinheit SP-E2 zu drei weiteren Einträgen, so daß der Hilfsspeicher H-SP wiederum gefüllt ist. Da gleichzeitig noch ein weiterer Eintrag, nämlich aus Zeile 4 der Speichereinheit SP-E2, zu übernehmen ist, muß im Hilfsspeicher H-SP analog dem Vorgehen beim Suchlauf SL2 durch Erweiterung des gültigen Suchbitmusters auf die Kombination 10 erneut Platz geschaffen werden. In diesem Fall sind davon die beiden letzten Einträge im Hilfsspeicher H-SP betroffen, was durch L am rechten Rand gekennzeichnet ist.

Anschließend wird mit dem neuen Suchargument die letzte Zeile der Speichereinheit SP-E2 überprüft, die vorangehend nicht mehr in den Hilfsspeicher H-SP übernommen werden konnte. Da dieser Eintrag ebenfalls dem neuen Suchargument entspricht, wird er nunmehr als dritter Eintrag in den Hilfsspeicher H-SP übernommen und der Suchlauf mit der Überprüfung der Speichereinheiten SP-E3 und SP-E4 fortgesetzt. Da hierbei keine Treffer mehr erzielt werden, werden die gesammelten drei Einträge endgültig aussortiert.

Der nächste Suchlauf SL7 wird mit dem in der Reihenfolge nächstfolgenden Suchargument 11 durchgeführt. Dabei werden lediglich bei der Überprüfung der Speichereinheit SP-E2 zwei Einträge und bei der Überprüfung der Speichereinheit SP-E3 zwei Einträge gefunden. Der Hilfsspeicher H-SP ist also wiederum gefüllt. Im vorliegenden Falle bleibt dies jedoch ohne Auswirkung, da von der Speichereinheit SP-E3 oder der nachfolgenden Speichereinheit SP-E4 kein weiterer Eintrag zu übernehmen ist. Alle vier Einträge verbleiben daher im Hilfsspeicher H-SP und können am Ende des Suchlaufes sortiert ausgegeben werden. Der Such- und Sortiervorgang ist damit abgeschlossen, da aufgrund der Gesetzmäßigkeit für die Bildung der Suchargumente für die einzelnen Suchläufe weitere Einträge nicht mehr vorhanden sein können.

Das vorangehend beschriebene Beispiel zeigt zugleich, wie durch Maskenabdeckung des Suchargumentes zu Beginn eines Suchvorganges und durch die damit verbundene Reduzierung auf ein mehrere mögliche Gruppen von Daten erfassendes Suchargument zunächst eine stärkere Füllung des Hilfsspeichers H-SP und gegebenenfalls eine Überfüllung provoziert wird. Wie nämlich der Ablauf des gesamten Suchvorganges gezeigt hat, ist nämlich ein insgesamt dreistelliges Suchargument erforderlich, um den Suchvorgang durchführen zu können. Trotzdem wird das dreistellige Suchargument zunächst auf ein zweistelliges reduziert, um so eine höhere Trefferausbeute zu ermöglichen, was dann im zweiten Suchlauf SL2 zur Überfüllung des Hilfsspeichers und damit zur Rücknahme der anfänglichen Maskenabdeckung führt.

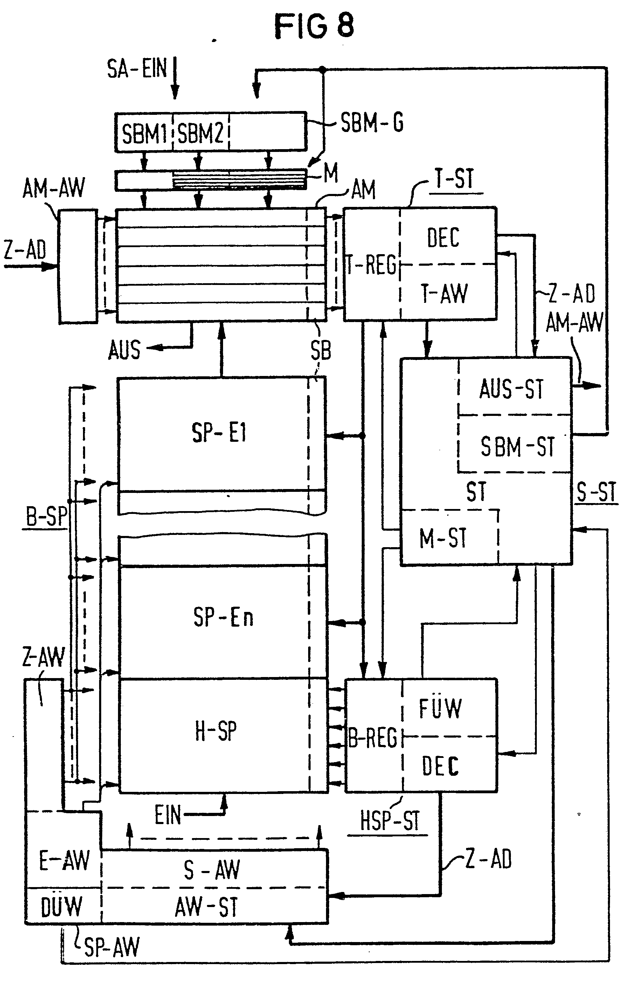

Abschließend sei anhand von Fig. 8 die Arbeitsweise eines Hybrid-Assoziativspeichers gemäß Fig. 3 bei der Durchführung der Sortierverfahren gemäß der Erfindung und insbesondere die Arbeitsweise der zusätzlich benötigten Einrichtungen näher erläutert. Abweichend von der der Fig. 3 ist bei Fig. 8 eine zweidimensionale Darstellung bei Beibehaltung gleicher Bezugszeichen für übereinstimmende Baueinheiten gewählt. Der obere Teil der Figur zeigt wiederum die Assoziationsmatrix AM mit der Auswahlschaltung AM-AW für die einzelnen Zeilen der Matrix anhand einer Adresse Z-AD, den Suchbitmuster-Generator SBM-G für die Bereitstellung der in den einzelnen Phasen benötigten Suchargumente in Form der Suchbitmuster SBM1 für die einzelnen Suchläufe und SBM2 für die Aussortierung der während der einzelnen Suchläufe im Hilfsspeicher H-SP aufgesammelten Daten. Die Bereitstellung der jeweils benötigten Suchargumente erfolgt durch die Maske M und die Auswertung der bei den einzelnen Assoziationsvorgängen erzielten Treffer durch die mit den einzelnen Zeilen der Assoziationsmatrix AM verbundene Trefferauswertesteuerung T-ST. Diese Trefferauswertesteuerung gliedert sich in bekannter Weise in drei Teile, nämlich ein Register T-REG für die Zwischenspeicherung der von der Assoziationsmatrix gemeldeten Treffer, in eine Trefferausweteschaltung T-AW, die in an sich bekannter Weise überwacht, ob gleichzeitig mehrere Treffer, nur ein Treffer oder gar kein Treffer erzielt worden ist, sowie in eine Prioritätssteuerung mit Codierer DEC, um die angezeigten Treffer der Reihe nach in die zugehörige Zeilenadresse Z-AD übersetzen zu können. Diese Zeilenadresse ermöglicht es, den Inhalt einer durch einen Treffer der Assoziationsmatrix AM gekennzeichneten Zeile über die Zeilenauswahlsteuerung AM-AW anzusteuern und über den Ausgang AUS auszugeben, was beispielsweise bei der Endsortierung der durchzuführenden Sortierverfahren gemäß der Erfindung erforderlich ist.

Unterhalb der Assoziationsmatrix AM ist wiederum der Basisspeicher B-SP dargestellt, der aus den Speichereinheiten SP-E1 bis SP-En und einer weiteren Speichereinheit, die den Hilfsspeicher H-SP bildet, besteht. Die Auswahl von einzelnen Zeilen oder Spalten innerhalb der einzelnen Speichereinheiten erfolgt durch die Speicherauswahlsteuerung SP-AW, die sich in bekannter Weise in eine gemeinsame Zeilenauswahlsteuerung Z-AW für die einzelnen Zeilen innerhalb der einzelnen Speichereinheiten, eine Spaltenauswahlsteuerung S-AW für die einzelnen Spalten in den einzelnen Speichereinheiten und in eine Auswahlsteuerung E-AW für die einzelnen Speichereinheiten des Basisspeichers B-SP gliedert, wobei die Zusammenarbeit dieser drei Auswahleinheiten durch eine übergeordnete Steuerung AW-ST koordiniert wird. Mit dieser Speicherauswahlsteuerung SP-AW ist eine Überwachungseinrichtung DÜW gekoppelt, die jeweils das Ende eines Suchdurchlaufes durch den gesamten Basisspeicher B-SP anzeigt. Diese Überwachungseinrichtung kann in einfacher Weise aus einer Kippstufe bestehen, die z. B. beim Erreichen der Endstellung durch die Auswahleinrichtung E-AW gesetzt wird.

Die dem Hilfsspeicher H-SP zugeordnete steuerung HSP-ST ist in ähnlicher Weise wie die Trefferauswertesteuerung T-ST ausgebildet und setzt sich zusammen aus einem Register B-REG, das je Zeile des Hilfsspeichers anzeigt, ob diese Zeile belegt oder frei ist, aus der Überwachungsschaltung FÜW, die anzeigt, ob alle Zeilen des Hilfsspeichers H-SP belegt sind, und aus einer Prioritätssteuerung mit Codierer DEC zur Ableitung der Zeilenadresse Z-AD derjenigen Zeile im Hilfsspeicher H-SP, die als nächste mit einem Eintrag zu belegen ist. Im Gegensatz zu der entsprechenden Einrichtung der Trefferauswertesteuerung T-ST besteht bei der Steuerung HSP-ST eine Rückkopplung zwischen der Prioritätssteuerung und dem Belegungsregister B-REG, damit bei jeder Eingabe in den Hilfsspeicher H-SP auch das zugehörige Registerbit gesetzt werden kann. Andererseits ist die Einrichtung FÜW im Gegensatz zur Einrichtung T-AW für die Trefferauswertung wesentlich einfacher aufgebaut, da lediglich zu überprüfen ist, ob alle Registerbit gesetzt sind, was mit einem einfachen UND-Glied erfolgen kann.

Die weiterhin gezeigte Steuereinrichtung S-ST gliedert sich ebenfalls in mehrere Einrichtungen, die von einer gemeinsamen Steuerung ST koordiniert werden. Diese Steuerung ST wertet zum einen die von der Trefferauswertung T-AW mitgeteilten Signale über die Art der Trefferaus und veranlaßt davon abhängig über die Steuerung SBM-ST die Abänderung der Suchbitmuster SBM durch den Generator SBM-G und/oder die Änderung der Maske M entsprechend dem zugrundegelegten Such- bzw. Sortieralgorithmus sowie die Umschaltung auf die jeweils nächstfolgende Speichereinheit im Basisspeicher, falls kein Treffer vorliegt. Zum anderen veranlaßt sie die Umsteuerung vom Suchdurchlauf auf Endsortieren abhängig vom Signal der Überwachungseinrichtung DÜW und umgekehrt vom Sortieren auf den nächsten Suchdurchlauf, wenn alle im Hilfsspeicher H-SP angesammelten Einträge aussortiert und ausgegeben sind, was ebenso von der Trefferauswertung T-AW mitgeteilt werden kann. Über die Teilsteuerung AUS-ST werden während des Sortiervorganges bei Anzeige eines Einzeltreffers die zugehörigen Zeilenadressen Z-AD von der prioritäts- und Codiersteuerung DEC der Trefferauswertesteuerung T-ST abgeholt und an die Zeilenauswahlschaltung AM-AW zum Auslesen des zugehörigen Zeileneintrags weitergeleitet. Des weiteren wird über die Teilsteuerung AUS-ST die Zeile über die Auswahlschaltung AM-AW gekennzeichnet, mit der nach einer Unterbrechung eines Suchlaufes infolge Überfüllung des Hilfsspeichers der Suchlauf mit erweitertem Suchargument fortgesetzt wird. Eng mit der gemeinsamen Steuerung ST der Steuereinrichtung S-ST ist die Markiersteuerung M-ST gekoppelt, die bei Füllung des Hilfsspeichers bzw. zum Markieren bereits aussortierter Einträge in den einzelnen Speichereinheiten des Basisspeichers wirksam geschaltet wird. Bei Vorliegen eines Füllungssignals von der Einrichtung FÜW prüft die Steuerung ST zunächst, ob noch weitere Treffer vorliegen, die einen Eintrag in den Hilfsspeicher nach sich ziehen würden. Ist dies der Fall, wird der Suchlauf gestoppt und über die Steuerung SBM-ST eine Änderung des Sucharguments herbeigeführt. Außerdem veranlaßt die Markiersteuerung M-ST nach Überprüfen der Einträge im Hilfsspeicher H-SP anhand des neu eingestellten Suchargumentes die Übertragung der im Register T-REG gespeicherten Treffer in das Register B-REG, so daß nicht von einem Treffer abgedeckte Zeilen als frei gekennzeichnet werden. Außerdem wird die Markiersteuerung M-ST nach jedem Such- bzw. Sortierlauf wirksam geschaltet und veranlaßt die Übertragung der im Register T-REG gespeicherten Treffer als Markierungen in die Spalte SB der jeweils angesteuerten Speichereinheit SP-E1 bis SP-En, abhängig von einer Mitteilung der Steuerung ST an die Steuerung AW-ST zur Wirksamschaltung der entsprechenden Spalte durch die Spaltenauswahlschaltung S-AW.

Die vorangehend beschriebenen zusätzlich benötigten Einrichtungen für die Durchführung der Sortierverfahren gemäß der Erfindung können also in einfacher Weise durch Verknüpfung der notwendigen Signale in Anlehnung an bereits bekannte Lösungen realisiert werden. Das gilt insbesondere für die Trefferauswertung T-AW in Verbindung mit der Steuerung SBM-ST, die bereits in der DE-PS 23 42 660 beschrieben ist.

Insgesamt ergibt sich damit folgender Arbeitsablauf : Nach Eingabe eines Suchargumentes in den Generator SBM-G und der Einstellung der Maske M mit Start der Einrichtung aus der Nullstellung der einzelnen Steuereinrichtungen heraus wird zunächst die Speichereinheit SP-E1 zur assoziativen Oberfläche AM/OP durchgeschaltet und der gesamte Inhalt dieser Speichereinheit anhand des wirksamen Suchargumentes überprüft. Ergibt sich dabei kein Treffer, so bewirkt die Steuerung ST anhand der von der Trefferauswertung T-AW mitgeteilten Aussage über die Speicherauswahlsteuerung SP-AW die Umsteuerung auf die nächstfolgende Speichereinheit usw.

Sobald die Trefferauswertung T-AW beim Durchsuchen einer der mit der Assoziationsmatrix AM- verbundenen Speichereinheit einen Treffer meldet, wird der Suchvorgang durch die Steuereinrichtung ST gestoppt und der Speicherauswahleinrichtung SP-AW ein Befehl zur Umschaltung auf den Hilfsspeicher H-SP durch Änderung der Einstellung der Auswahleinrichtung E-AW gegeben. Gleichzeitig wird die Prioritäts- und Codiereinrichtung DEC der Steuerung HSP-SP angesteuert, damit diese die Zeilenadresse Z-AD für die Einstellung der nächsten freien Speicherzeile im Hilfsspeicher H-SP bereitstellt. Außerdem wird über die Teilsteuerung AUS-ST der Sortiersteuerung S-ST von der Prioritäts- und Codiereinrichtung DEC der Trefferauswertesteuerung T-ST die Zeilenadresse Z-AD für die erste durch einen Treffer gekennzeichnete Zeile der Assoziationsmatrix AM abgeholt und der Auswahleinrichtung AM-AW zugeführt, so daß der Inhalt der ausgewählten Zeile in die bereitgestellte Zeile des Hilfsspeichers H-SP überführt werden kann. Dieses Spiel wiederholt sich solange, bis alle durch einen Treffer gekennzeichneten Zeilen der Assoziationsmatrix AM in den Hilfsspeicher übernommen sind. Dabei wird mit jedem Eintrag in den Hilfsspeicher H-SP im zugehörigen Belegungsregister B-REG die jeweils belegte Zeile als belegt gekennzeichnet.

Unterstellt man, daß die in den einzelnen Speichereinheiten SP-E1 bis SP-En enthaltenen Daten verschiedener Dateien annähernd gleichmäßig auf die einzelnen Speichereinheiten verteilt sind und somit eine Überfüllung des Hilfsspeichers H-SP während eines Suchlaufes nie auftreten und damit den Sortiervorgang blockieren kann, oder daß der Hilfsspeicher H-SP durch Zuschalten weiterer Speichereinheiten des Basisspeichers B-SP nach Bedarf vergrößerbar ist, so wird jeweils nach Übernahme aller in der assoziativen Matrix AM durch einen Treffer gekennzeichneten Einträge einer ausgewählten Speichereinheit in den Hilfsspeicher H-SP die Markierung der jeweils aus der zuletzt angesteuerten Speichereinheit SP-E... übernommenen Daten, damit diese bei den nachfolgenden Suchläufen nicht mehr berücksichtigt werden, sofort vorgenommen. Zu diesem Zweck überwacht die Steuerung ST der Sortiersteuerung S-ST die Aussage der Prioritäts- und Codiereinrichtung DEC der Trefferauswertesteuerung T-ST in Verbindung mit der Teilsteuerung AUS-ST und veranlaßt die Speicherauswahleinrichtung SP-AW zur Einstellung auf die gerade überprüfte Speichereinheit SP-E... durch die Auswahleinrichtung E-AW sowie zur Auswahl der die Sortiert-Bits aufnehmenden Spalte SB durch die Auswahleinrichtung S-AW. Anschließend wird durch die Markiersteuerung M-ST die gleichzeitige Übertragung der im Trefferregister T-REG registrierten Treffer auf parallelem Wege in die ausgewählte Spalte der ausgewählten Speichereinheit zur Markierung der ausgeschiedenen Zeileneinträge veranlaßt. Erst danach wird der Suchlauf mit Umsteuerung auf die nächstfolgende Speichereinheit durch die Steuereinrichtung ST fortgesetzt.

Um das dabei notwendige Umschalten zwischen den einzelnen Speichereinheiten zu vermeiden, kann die Markierung auch unmittelbar nach Feststellung von Treffern vor Übertragung der durch einen Treffer gekennzeichneten Einträge in den Hilfsspeicher vorgenommen werden.

Ist dagegen die Speicherkapazität des Hilfsspeichers H-SP begrenzt, da wie beim Ausführungsbeispiel lediglich eine Speichereinheit des Basisspeichers B-SB als Hilfsspeicher zur Verfügung steht, so kann die Markierung der aussortierten Daten jeweils erst am Ende eines Suchdurchlaufes vorgenommen werden, da erst dann abzusehen ist, welche der in den Hilfsspeicher übernommenen Daten den Suchlauf tatsächlich überstanden haben und daher aussortiert werden können. In diesem Falle wird, solange nicht die Füllzustandsüberwachung FÜW des Hilfsspeichers H-SP anspricht, ein eingeleiteter Suchlauf fortgesetzt, bis die Überwachungseinrichtung DÜW ansprich und das Ende eines Suchlaufes anzeigt. Die Steuerung ST der Sortiersteuerung S-ST veranlaßt daraufhin die Umsteuerung auf den Sortiervorgang. Zu diesem Zweck wird über die Speicherauswahleinrichtung SP-AW zunächst über die Auswahleinrichtung E-AW der Hilfsspeicher H-SP angesteuert und damit mit der assoziativen Oberfläche verbunden. Desweiteren wird über die Teilsteuerung SBM-ST der Generator SBM-G und die Maske M auf das für den Sortiervorgang benötigte Suchargument umgeschaltet und die Assoziationsmatrix AM wirksam geschaltet. Im Wechselspiel zwischen Trefferauswertesteuerung T-ST und Sortiersteuerung S-ST werden dann die im Hilfsspeicher H-SP angesammelten Einträge sortiert und über den Ausgang AUS der Assoziationsmatrix AM ausgegeben.

Nach Beendigung des Sortiervorganges schaltet die Steuerung ST auf einen Markiersuchlauf um. Zu diesem Zweck wird über die Teilsteuerung SBM-ST das am Schluß des vorausgegangenen Suchlaufes gültige Sortierbitmuster am Generator SB-G und an der Maske M wieder eingestellt und über die Speicherauswahleinrichtung SP-AW die erste Speichereinheit SP-E1 ausgewählt. Die dabei vom Trefferregister T-REG festgestellten Trefferanzeigen werden dann jeweils am Ende eines Assoziationsvorganges, gesteuert durch die Markiersteuerung M-ST und nach vorheriger Auswahl der Spalte für die Sortiert-Bits SB durch die Auswahleinrichtung S-AW der Speicherauswahleinrichtung SP-AW wiederum parallel übertragen. Dieser Markiervorgang wird daraufhin für jede der Speichereinheiten SP-E2 bis SP-En fortgesetzt. Erst danach wird bei gleichzeitiger Löschung des Belegungsregisters B-REG auf den nächsten Suchlauf umgesteuert.

Spricht während eines der Suchläufe die Einrichtung FÜW zur Überwachung des Füllungszustandes des Hilfsspeichers H-SP an, so veranlaßt die Steuerung ST bei Vorliegen eines weiteren Treffers, der die Übernahme eines weiteren Eintrags in den Hilfsspeicher H-SP anziegt, über die Teilsteuerung SBM-ST die Erweiterung des zur Zeit gültigen Suchargumentes entsprechend dem gültigen Suchalgorithmus und die Überprüfung der im Hilfsspeicher H-SP gespeicherten Einträge durch die Assoziationsmatrix AM anhand des neuen Suchargumentes. Die daraufhin im Trefferregister T-REG registrierten Treffer werden dann, veranlaßt durch die Markiersteuerung M-ST, parallel in das Belegungsregister B-REG der Steuerung HSP-ST übergeben und so alle nicht dem neuen Suchargument entsprechenden Einträge im Hilfsspeicher H-SP gelöscht. Anschließend wird der Inhalt des Belegungsregisters B-REG nach vorheriger Auswahl der Spalte SB im Hilfsspeicher H-SP durch die Auswahleinrichtung S-AW in den Hilfsspeicher übernommen und so die gültigen Einträge markiert. Erst danach veranlaßt die Steuerung ST die Fortsetzung des abgebrochenen Suchlaufes durch den Basisspeicher B-SP, und zwar wird der Suchlauf mit der Zeile der zuletzt geprüften Speichereinheit fortgesetzt, die nicht mehr in den Hilfsspeicher wegen dessen Überfüllung übernommen werden konnte. Zu diesem Zweck speichert die Teilsteuerung AUS-ST z. B. die jeweils zuletzt von der Prioritäts- und Codiereinrichtung DEC der Trefferauswertesteuerung T-ST vor Abbruch des letzten Suchlaufes mitgeteilte Zeilenadresse Z-AD und vergleicht diese mit den nachfolgend zugeführten Zeilenadressen, bis die gleiche Zeilenadresse erreicht ist. Erst die dieser Zeilenadresse entsprechende Zeilenadresse und die nachfolgenden Zeilenadressen kennzeichnen neue Einträge für den Hilfsspeicher H-SP, die dann in der bereits beschriebenen Weise in den Hilfsspeicher übernommen werden. Auch der weitere Ablauf des Suchens und Sortierens erfolgt dann in der bereits beschriebenen Weise.

Verwendet man zur Eingabe in den Basisspeicher B-SP, wie bereits in Fig. 3 angedeutet ist, einen zusätzlichen Eingabepufferspeicher P-SP und sammelt man die für den Hilfsspeicher H-SP vorgesehenen Einträge zunächst in diesem Eingabepufferspeicher, bevor sie dann gemeinsam am Ende eines Suchlaufes oder bei Überfüllung in den Hilfsspeicher H-SP übertragen werden, so kann auf die zusätzliche Steuerung HSP-ST für den Hilfsspeicher H-SP verzichtet werden, da in der Regel der Eingabepufferspeicher P-SP zu übernehmende Einträge immer in die nächste freie Zeile eingibt. Mit diesem Pufferspeicher ist dann lediglich eine Einrichtung FÜW für die Überwachung des Füllungszustandes vorzusehen, wobei das Füllungssignal in einfacher Weise von der Einstellung der Zeilenauswahl für diesen Eingabepufferspeicher abgeleitet werden kann. Eine zusätzliche Belegungsüberwachungssteuerung ist in diesem Falle nicht erforderlich, da bei jeder Überfüllung die im Pufferspeicher P-SP vorliegenden Daten zunächst in den Hilfsspeicher H-SP übergeben werden, bevor die Assoziationsmatrix AM überprüft, welche Einträge dem neuen Suchargument entsprechen, und da die aufrechtzuerhaltenden Einträge über den Ausgang AUS der Assoziationsmatrix AM dann wieder der Reihe nach in den Pufferspeicher P-SP eingeschrieben werden können.

**Ansprüche**

1. Hybrid-Assoziativspeicher, bestehend aus einer eine Vielzahl von Assoziationsfeldern aufweisenden Assoziationsmatrix (AM) als assoziative Oberfläche und einem eine Vielzahl von Speichereinheiten (z. B. SP-E1 bis SP-En) aufweisenden, nicht assoziativen Basisspeicher, wobei die Speichereinheiten jeweils analog der Assoziationsmatrix aus den Assoziationsfeldern entsprechenden Speicherabschnitten zusammengesetzt sind, so daß jeweils ein Speicherabschnitt aus jeder Speichereinheit miteinander und mit demselben Assoziationsfeld der Assoziationsmatrix korrespondiert und der Inhalt jedes Speicherabschnittes zu dem zugehörigen Assoziationsfeld der Assoziationsmatrix übertragbar ist, dadurch gekennzeichnet, daß von den im Basisspeicher (B-SP) vorgesehenen Speichereinheiten neben den Speichereinheiten (z. B. SP-E1 bis SP-En) für die Speicherung allgemeiner Daten von Dateien oder Tabellen wenigstens eine gesonderte Speichereinheit (z. B. SP-B, H-SP, SP-D) für die Speicherung von Daten und Informationen zur Steuerung und/oder Unterstützung von Arbeitsabläufen des Hybrid-Assoziativspeichers verwendet wird und diese gesonderte Speichereinheit bzw. Speichereinheiten in gleicher Weise wie die übrigen Speichereinheiten mit der assoziativen Oberfläche (AM) verbindbar ist, und daß durch gezielte Auswahl der gesonderten Speichereinheit bzw. -einheiten im Basisspeicher (B-SP) abhängig von während eines Arbeitsablaufes auftretenden Steuerkriterien (T-AW, FÜW, DÜW) die durch die angeschaltete assoziative Oberfläche (AM) ermittelten Treffersignale in Verbindung mit gesonderten Einrichtungen (EXOR1, T-M, EXOR2, REG2, M2, PST2, AD-UM ; S-ST, HSP-ST) für die weitere Steuerung des Arbeitsablaufes ausgewertet und in entsprechende Steuersignale umgesetzt werden.

2. Hybrid-Assoziativspeicher nach Anspruch 1, dadurch gekennzeichnet, daß eine der gesonderten Speichereinheiten (SP-B) für jede der für die Speicherung allgemeiner Daten vorgesehenen Speichereinheiten (SP-E1 bis SP-En) ein Belegungskennzeichen (z. B. B = 0 = vollständig frei oder B = 1 = mit wenigstens einem Eintrag belegt) gespeichert enthält, daß neben den Trefferausgängen (TA) auch die Leseausgänge (LA) der Assoziationsmatrix (AM) jeweils über einen Inverter mit einer Stufe eines Registers (REG2) verbunden sind, dem eine Prioritätssteuerung (PST2) nachgeschaltet ist, und daß nach Lesen der durch die Prioritätssteuerung (T-PST) der Trefferauswertesteuerung (T-ST) gekennzeichneten Zeile der Assoziationsmatrix (AM) anhand der von beiden Prioritätssteuerungen (T-PST und PST2) gelieferten Koodinatenwerte die Adresse (E-AD) einer nicht belegten Speichereinheit im Basisspeicher (B-SP) abhängig von dem in der zusätzlichen Speichereinheit (SP-B) gespeichert enthaltenen Belegungskennzeichen (B) ermittelt wird.

3. Hybrid-Assoziativspeicher nach Anspruch 2, dadurch gekennzeichnet, daß die Inverter an den Treffer- und Leseausgängen (TA bzw. LA) der Assoziationsmatrix (AM) jeweils aus einem exklusiven ODER-Glied (EXOR) bestehen und daß die exklusiven ODER-Glieder abhängig von einem auf den jeweils zweiten Steuereingang einwirkenden Signal (inv) als einfacher Schalter oder als Inverter arbeiten.

4. Hybrid-Assoziativspeicher nach Anspruch 2 oder 3, dadurch gekennzeichnet, daß zwischen Register (T-REG bzw. REG2) und Prioritätssteuerung (T-PST bzw. PST2) jeweils eine steuerbare Maske (T-M bzw. M2) angeordnet ist, wobei die Einstellung der Maske (M2) zur Auswertung der gelesenen Matrixzeile mit der dem Suchargument (ARG) vorgeschalteten Maske (M) übereinstimmt.

5. Hybrid-Assoziativspeicher nach Anspruch 1, dadurch gekennzeichnet, daß wenigstens eine der gesonderten Speichereinheiten (H-SP) als Hilfsspeicher für die Zwischenspeicherung von durch Treffer der assoziativen Oberfläche (AM) gekennzeichneten Daten des Basisspeichers (B-SP) verwendet wird, daß mit der Trefferauswertesteuerung (T-ST) der assoziativen Oberfläche (AM/OP) eine Steuereinrichtung (S-ST) zur Übertragung der bei Sortiervorgängen durch Treffer gekennzeichneten Daten in den Hilfsspeicher (H-SP) gekoppelt ist, daß mit der Auswahlsteuerung (SP-AW) für die Speichereinheiten (SP-E...) im Basisspeicher (B-SP) eine Überwachungseinrichtung (DÜW) zur Überwachung des Endes eines Suchlaufes durch die relevanten Teile des Basisspeichers (B-SP) gekoppelt ist und daß eine Einrichtung (M-ST) zur Markierung der aussortierten Daten in den einzelnen Speichereinheiten (SP-E...) des Basisspeichers (B-SP) bei Sortiervorgängen vorgesehen ist.

6. Hybrid-Assoziativspeicher nach Anspruch 5, dadurch gekennzeichnet, daß die Speicherkapazität des Hilfsspeichers (H-SP) durch Bereitstellung weiterer Speichereinheiten des Basisspeichers (B-SP) nach Bedarf vergrößerbar ist.

7. Hybrid-Assoziativspeicher nach Anspruch 5, dadurch gekennzeichnet, daß die Speicherkapazität des Hilfsspeichers (H-SP) fest vorgegeben und eine Einrichtung (FÜW) zur Überwachung des Füllungszustandes des Hilfsspeichers (H-SP) vorgesehen ist.

8. Hybrid-Assoziativspeicher nach Anspruch 7, gekennzeichnet durch eine mit der Einrichtung (FÜW) zur Überwachung des Füllungszustandes des Hilfsspeichers (H-SP) und mit der Einrichtung (SBM-G/M) zur Bereitstellung des Suchargumentes gekoppelte Einrichtung (SBM-ST) zur Erweiterung des Suchargumentes (SBM1) bei Überschreiten der Speicherkapazität des Hilfsspeichers (H-SP) und durch mit dem Hilfsspeicher (H-SP) gekoppelte Einrichtungen (HSP-ST) zur Löschung der Daten, die dem neuen Suchargument nicht mehr entsprechen, und zur Kennzeichnung freier Speicherplätze im Hilfsspeicher (H-SP).

9. Verfahren zum Sortieren von in einem Hybrid-Assoziativspeicher nach einem der Ansprüche 5 bis 8 gespeicherten Daten, dadurch gekennzeichnet, daß durch ein variabel einstellbares Suchargument (SBM1) der assoziativen Oberfläche (AM/OP) Gruppen von zusammen sortierfähigen Daten aus dem Basisspeicher (B-SP) ausgesucht werden, daß bei Vorliegen eines Treffers die zugehörigen Daten in eine zusätzliche Speichereinheit als Hilfsspeicher (H-SP) übernommen werden, daß jeweils nach Durchsuchen aller Speichereinheiten (SP-E1 bis SP-En) des Basisspeichers (B-SP) die im Hilfsspeicher (H-SP) gesammelten Daten in an sich bekanter Weise sortiert und ausgegeben werden, daß der Such- und Sortiervorgang wiederholt wird, bis alle Gruppen von Daten, die zu sortieren sind, erfaßt sind, und daß die jeweils aussortierten Daten als solche im Basisspeicher (B-SP) markiert werden.

10. Verfahren nach Anspruch 9, dadurch gekennzeichnet, daß bei nach Bedarf vergrößerbarer Speicherkapazität des Hilfsspeichers (H-SP) die aus einer Speichereinheit (z. B. SP-E1) des Basisspeichers (B-SP) in den Hilfsspeicher (H-SP) übernommenen Daten unmittelbar als aussortiert markiert werden.

11. Verfahren nach Anspruch 9, dadurch gekennzeichnet, daß bei fest vorgegebener Speicherkapazität des Hilfsspeichers (H-SP) und deswegen auftretender Überfüllung des Hilfsspeichers (H-SP) das Suchargument (SBM1) erweitert wird und alle Daten im Hilfsspeicher (H-SP) gelöscht werden, die dem erweiterten Suchargument nicht mehr entsprechen, und daß der Suchvorgang im Basisspeicher (B-SP) mit dem erweiterten Suchargument fortgesetzt wird, gegebenenfalls mit weiteren Erweiterungen des Sucharguments bei weiteren Überfüllungen des Hilfsspeichers, bis alle in Frage kommenden Daten endgültig aussortiert sind.

12. Verfahren nach Anspruch 11, dadurch gekennzeichnet, daß zu Beginn eines Suchvorganges das vorgegebene Suchargument (SBM1) durch Maskenabdeckung (M) auf ein übergeordnetes, mehrere mögliche Gruppen von Daten erfassendes Suchargument reduziert wird und daß bei Gefahr des Überlaufs im Hilfsspeicher (H-SP) die Maskenabdeckung, gegebenenfalls schrittweise, wieder zurückgenommen wird und nicht zugehörige aufgesammelte Daten im Hilfsspeicher (H-SP) gelöscht werden.

13. Verfahren nach Anspruch 11 oder 12, dadurch gekennzeichnet, daß jeweils nach Durchsuchen aller Speichereinheiten (SP-E1 bis SP-En) des Basisspeichers (B-SP) alle Daten im Basisspeicher anhand des jeweils zuletzt gültigen Suchargumentes (SBM1) erneut durchsucht und die durch einen Treffer der assoziativen Oberfläche (AM/OP) gekennzeichneten Daten im Basisspeicher (B-SP) als Aussortiert markiert werden, ohne daß dabei Daten in den Hilfsspeicher (H-SP) übernommen werden.

14. Verfahren nach Anspruch 10 oder 13, dadurch gekennzeichnet, daß alle aussortierten Daten einer Speichereinheit (z. B. SP-E1) gleichzeitig als aussortiert markiert werden.

15. Verfahren nach einem der Ansprüche 9 bis 14, dadurch gekennzeichnet, daß das jeweilige Such- bzw. Sortierargument (SBM1 bzw. SBM2) von einem Sortierbitmuster-Generator (SBM-G) geliefert wird, der abhängig vom jeweiligen Such- bzw. Sortierergebnis steuerbar ist.

**Claims**

1. A hybrid associative store composed of an association matrix (AM) having a plurality of association fields, as associative surface, and of a non-associative base store having a plurality of storage units (e. g. SP-E1 to SP-En), where the storage units are each composed of storage sections analogous to the association matrix to equate to the association fields, so that each storage section equates to another in each storage unit and all these corresponding storage sections equate to the same association field of the association matrix, and the content of each storage section can be transferred to the associated association field of the association matrix, characterised in that of the storage units provided in the base store (B-SP), in addition to the storage units (e. g. SP-E1 to SP-En) which serves to store general data of data files or tables, at least one special storage unit (e. g. SP-B, H-SP, SP-D) is used to store data and items of information for controlling and/or supporting operating sequences of the hybrid associative store, and this special storage unit or storage units can be connected to the associative surface (AM) in the same way as the other storage units, and that by purposively selecting the special storage unit or units in the base store (B-SP), in dependence upon control criteria (T-AW, FÜW, DÜW) which occur during an operating sequence, the hit signals determined by the connected associative surface (AM) are analysed, in combination with special devices (EXOR1, T-M, EXOR2, REG2, M2, PST2, AD-UM ; S-ST, HSP-ST), for the further control of the operating sequence and are converted into corresponding control signals.

2. A hybrid associative stores as claimed in Claim 1, characterised in that for each of the storage units (SP-E1 to SP-En) provided for the storage of general data, one of the special storage units (SP-B) stores an availability characteristic (e. gg. B = 0 = completely free or B = 1 = filled with at least one entry), that in addition to the hit outputs (TA) the read outputs (LA) of the association matrix (AM) are also each connected *via* an inverter to a stage of a register (REG2) which is followed by a priority control unit (PST2), and that following the read-out of that row of the association matrix (AM) characterised by the priority control unit (T-PST) of the hit analysis control unit (T-ST) with the assistance of the co-ordinate values supplied by the two priority control units (T-PST and PST2) the address (E-AD) of an available storage unit in the base store (B-SP) is determined in dependence upon the availability characteristic (B) which is stored in the additional storage unit (SP-B).

3. A hybrid associative store as claimed in Claim 2, characterised in that the inverters at the hit outputs and read outputs (TA and LA respectively) of the association matrix (AM) each consist of a EXCLUSIVE-OR gate (EXOR), and that the EXCLUSIVE-OR gates operate as a simple switch or as an inverter in dependence upon a signal (inv) which in each case acts upon the second control input.

4. A hybrid associative store as claimed in Claim 2 or 3, characterised in that between the registers (T-REG or REG2 as the case may be) and the priority control unit (T-PST or PST2) as the case may be) there is arranged a controllable mask (T-M or M2 as the case may be), where the setting of the mask (M2) for the analysis of the read-out matrix row is identical to that of the mask (M) which precedes the search argument (ARG).

5. A hybrid associative store as claimed in Claim 1, characterised in that at least one of the special storage units (H-SP) is used as auxiliary store for the intermediate storage of data items of the base store (B-SP) which are characterised by meetings of the associative surface (AM), that the hit analysis control unit (T-ST) of the associative surface (AM-OP) is coupled to a control device (S-ST) for the transmission of the data items into the auxiliary store (H-SP) characterised by hit during sorting processes, that the selection control unit (SP-AW) for the storage units (SP-E...) in the base store (B-SP) is coupled to a monitoring device (DÜW) which serves to monitor the end of a search process by the relevant components of the base store (B-SP), and that a device (M-ST) is provided which serves to mark the sorted data in the individual storage units (SP-E...) of the base store (B-SP) during sorting processes.

6. A hybrid associative store as claimed in Claim 5, characterised in that the storage capacity of the auxiliary store (H-SP) can be increased as required by making available further storage units of the base store (B-SP).

7. A hybrid associative store as claimed in Claim 5, characterised in that the storage capacity of the auxiliary store (H-SP) is predetermined and a device (FÜW) is provided for monitoring the filling level of the auxiliary store (H-SP).

8. A hybrid associative store as claimed in Claim 7, characterised by a device (SBM-ST) which is coupled to the device (FÜW) which serves to monitor the filling level of the auxiliary store (H-SP) and to the device (SBM-G/M) which serves to make available the search argument and which itself serves to extend the search argument (SBM1) in the event that the storage capacity of the auxiliary store (H-SP) is exceeded, and further characterised by devices (HSP-ST) which are coupled to the auxiliary store (H-SP) and which serve to earse the data which no longer corresponds to the new search argument and to characterise free storage positions within the auxiliary store (H-SP).

9. A process for storing data stored in a hybrid associative store as claimed in one of Claims 5 to 8, characterised in that by means of a variably adjustable search argument (SBM1) of the associative surface (AM/OP) groups of data, which can be sorted together, are searched from the base store (B-SP), that in the event of a hit the associated data items are transferred into an auxiliary store (H-SP) serving as an additional storage unit, that following each search of all the storage units (SP-E1 to SP-En) of the base store (B-SP) the data items collected in the auxiliary store (H-SP) are sorted in known manner and are output, that the searching and sorting process is repeated until all the groups of data which are to be sorted have been dealt with, and that the sorted items of data are in each case marked as such in the base store (B-SP).

10. A process as claimed in Claim 9, characterised in that where the storage capacity of the auxiliary store (H-SP) can be increased as required, the data items transferred from a storage unit (e. g. SP-E1) of the base store (B-SP) into the auxiliary store (H-SP) are directly marked as sorted.

11. A process as claimed in Claim 9, characterised in that where the storage capacity of the auxiliary store (H-SP) is predetermined and the auxiliary store (H-SP) consequently becomes overfilled the search argument (SBM1) is extended and all the data in the auxiliary store (H-SP) which no longer correspond to the extended search argument are erased, and that the search process in the base store (B-SP) is continued with the extended search argument, possibly including further extensions of the search argument in the event of further overfilling of the auxiliary store, until all the items of data in question have been finally sorted.

12. A process as claimed in Claim 11, characterised in that at the beginning of a search process the predetermined search argument (SBM1) is reduced by a mask covering (M) to a superordinate search argument which includes a plurality of possible groups, and that in the event of the danger of overflow in the auxiliary store (H-SP) the mask covering is withdrawn, possibly in steps, and non-associated collected data in the auxiliary store (H-SP) is erased.

13. A process as claimed 11 or 12, characterised in that following each search of all the storage units (SP-E1 to SP-En) of the base store (B-SP), all the data items in the base store are searched again on the basis of the last valid search argument (SBM1), and the data in the base store (B-SP) characterised by a hit of the associative surface (AM/OP) are marked as sorted without thereby transferring data into the auxiliary store (H-SP).

14. A process as claimed in Claim 10 or 13, characterised in that all the sorted data items of a storage unit (e. g. SP-E1) are simultaneously marked as sorted.

15. A process as claimed in one of Claims 9 to 14, characterised in that the particular search or sorting argument (SBM1 or SBM2) is supplied by a sorting bit pattern generator (SBM-G) which can be controlled in dependence upon the particular search or sorting result.

## Revendications

1. Mémoire associative hybride, constituée par une matrice d'association (AM) comportant un grand nombre de zones d'association et servant de surface associative et par une mémoire de base non associative comportant un grand nombre d'unités de mémoire (par exemple SP-E1 à SP-En), les unités de mémoire étant formées respectivement de la même manière que la matrice d'association, par des sections de mémoire correspondant aux zones d'association de telle sorte que les différentes sections de mémoire provenant des unités de mémoire respectives se correspondent entre elles et correspondent à la même zone d'association de la matrice d'association et que le contenu de chaque section de mémoire peut être transmis à la zone d'association associée de la matrice d'association, caractérisée par le fait que parmi les unités de mémoire prévues dans la mémoire de base (B-SP), en dehors des unités de mémoire (par exemple SP-E1 à SP-En) pour la mémorisation de données générales de fichiers ou de tableaux, au moins un élément de mémoire particulier (par exemple SP-B, H-SP, SP-D) est utilisé pour la mémorisation de données et d'informations servant à commander et/ou à assister des cycles de travail de la mémoire associative hybride et que cette ou ces unités de mémoire particulières peuvent être reliées de la même façon que les autres unités de mémoire à la surface associative (AM), et que grâce au choix approprié de la ou des unités de mémoire particulières dans la mémoire de base (B-SP), les signaux de coups au but, déterminés par la surface associative (AM) raccordée, sont exploités, en fonction de critères de commande (T-AW, FÜW, DÜW) apparaissant pendant un cycle de travail, en liaison avec des dispositifs particuliers (EXOR1, T-M, EXOR2, REG2, M2, PST2, AD-UM ; S-ST, HSP-ST) pour la commande ultérieure de l'exécution de travail et sont convertis en signaux de commande correspondants.

2. Mémoire associative hybride suivant la revendication 1, caractérisée par le fait que l'une des unités de mémoire particulière (SP-B) pour chacune des unités de mémoire (SP-E1 à SP-En) prévues par la mémorisation de données générales, contient un caractère d'occupation (par exemple B = 0 = état totalement libre ou B = 1 = occupation par au moins une inscription) mémorisée en elle, qu'en dehors des sorties de coups au but (TA), également les sorties de lecture (LA) de la matrice d'association (AM) sont reliées respectivement par l'intermédiaire d'un inverseur à un étage d'un registre (REG2) en aval duquel est branché un dispositif de commande de priorité (PST2), et qu'après la lecture de la ligne, caractérisée par le dispositif de commande de priorité (T-PST) du dispositif de commande d'exploitation des coups au but (T-ST), de la matrice d'association (AM) l'adresse (E-AD) d'une unité de mémoire non occupée de la mémoire de base (B-ST) est déterminée sur la base des valeurs de coordonnées délivrées par les deux dispositifs de commande de priorité (T-PST et PST2), en fonction du caractère d'occupation (B) qui est mémorisé dans l'unité supplémentaire de mémoire (SP-B).

3. Mémoire associative hybride suivant la revendication 2, caractérisée par le fait que les inverseurs présents sur les sorties des coups au but et sur les sorties de lecture (TA et LA) de la matrice d'association (AM) sont constitués respectivement par un circuit OU-Exclusif (EXOR) et que les circuits OU-Exclusif fonctionnent à la manière de commutateurs simples ou à la manière d'inverseurs en fonction d'un signal (inv) agissant sur la seconde entrée respective de commande.

4. Mémoire associative hybride suivant la revendication 2 ou 3, caractérisée par le fait qu'un masque (T-M ou M2) pouvant être commandé est disposé respectivement entre un registre (T-REG ou REG2) et un dispositif de commande de priorité (T-PST ou PST2) et que le réglage du masque (M2) servant à exploiter la ligne de matrice lue coïncide avec le masque (M) disposé en amont de l'argument de recherche (ARG).

5. Mémoire associative hybride suivant la revendication 1, caractérisée par le fait qu'au moins l'une des unités de mémoire particulières (H-SP) est utilisée en tant que mémoire auxiliaire pour la mémorisation temporaire de données de la mémoire de base (B-SP), caractérisée par des coups au but de la surface associative (AM), qu'un dispositif de commande (S-ST) servant à transmettre les données caractérisées par les coups au but lors de processus de tri, dans la mémoire auxiliaire (H-SP) est accouplé au dispositif de commande d'exploitation des coups au but (T-ST) de la surface associative (AM/OP), qu'un dispositif de contrôle (DÜW) servant à contrôler la fin d'un cycle de recherche dans les parties concernées de la mémoire de base (B-SP) est accouplé au dispositif de commande de sélection (SP-AW) pour les unités de mémoire (SP-E...) et qu'il est prévu un dispositif (M-ST) servant au marquage des données extraites des différentes unités de mémoire (SP-E...) de la mémoire de base (B-SP) lors d'opérations de tri.

6. Mémoire associative hybride suivant la revendication 5, caractérisée par le fait que la capacité de mémoire de la mémoire auxiliaire (H-SP) peut être accrue en cas de besoin par la préparation d'unités supplémentaires de mémoire de la mémoire de base (B-SP).

7. Mémoire associative hybride suivant la revendication 5, caractérisée par le fait que la capacité de mémoire de la mémoire auxiliaire (H-SP) est prédéterminée de façon fixe et qu'il est prévu un dispositif (FÜW) servant à contrôler l'état de remplissage de la mémoire auxiliaire (H-SP).

8. Mémoire associative hybride suivant la revendication 7, caractérisée par un dispositif (SBM-ST), qui est accouplé au dispositif (FÜW) servant à contrôler l'état de remplissage de la mémoire auxiliaire (H-SP) et au dispositif (SBM-G/M) servant à préparer l'argument de recherche et qui est utilisé pour l'extension de l'argument de recherche (SBM1) lors du dépassement de la capacité de la mémoire auxiliaire (H-SP), et par des dispositifs (HSP-ST) qui sont accouplés à la mémoire auxiliaire (H-SP) et qui servent à effacer les données qui ne correspondent plus au nouvel argument de recherche, et qui sont utilisés pour caractériser des cases de mémoire libres dans la mémoire auxiliaire (H-SP).

9. Procédé de tri de données mémorisées dans une mémoire associative hybride suivant l'une des revendications 5 à 8, caractérisé par le fait que des groupes de données, aptes à être triées ensemble, sont recherchés dans la mémoire de base (B-SP) au moyen d'un argument de recherche (SBM1), réglable d'une manière variable, de la surface associative (AM/OP), que dans le cas de la présence d'un coup au but, les données associées sont transférées dans une unité de mémoire supplémentaire servant de mémoire auxiliaire (H-SP), qu'après l'exploration de toutes les unités de mémoire (SP-E1 à SP-En) de la mémoire de base (B-SP), les données rassemblées dans la mémoire auxiliaire (H-SP) sont triées et extraites de façon connue en soi, que l'opération de recherche et de tri est répétée jusqu'à ce que tous les groupes de données, qui doivent être triés, soient recensés, et que les données respectivement extraites sont marquées en tant que telles dans la mémoire de base (B-SP).

10. Procédé suivant la revendication 9, caractérisé par le fait que dans le cas d'une capacité de la mémoire auxiliaire (H-SP) susceptible d'être accrue en cas de besoin, les données transférées hors d'une unité de mémoire (par exemple SP-E1) de la mémoire de base (B-SP) dans la mémoire auxiliaire (H-SP) sont marquées directement en tant que données extraites.

11. Procédé suivant la revendication 9, caractérisé par le fait que dans le cas d'une capacité prédéterminée d'une façon fixe de la mémoire auxiliaire (H-SP) et du dépassement de capacité, apparaissant de ce fait, de cette mémoire auxiliaire, l'argument de recherche (SBM1) est étendu et toutes les données de la mémoire auxiliaire (H-SP), qui ne correspondent plus à l'argument de recherche étendu, sont effacées et que le processus de recherche dans la mémoire de base (B-SP) se poursuit avec l'argument de recherche étendu, éventuellement avec des extensions supplémentaires de l'argument de recherche dans le cas de dépassements supplémentaires de capacité de la mémoire auxiliaire jusqu'à ce que toutes les données considérées soient extraites de façon définitive.

12. Procédé suivant la revendication 11, caractérisé par le fait qu'au début d'un processus de recherche, l'argument prédéterminé de recherche (SBM1) est limité par masquage (M) à un argument de recherche d'ordre supérieur, englobant plusieurs groupes possibles de données et que dans le cas d'un risque de dépassement de capacité dans la mémoire auxiliaire (H-SP), le masquage est à nouveau retiré, éventuellement pas à pas, et que des données collectées non associées, de la mémoire auxiliaire (H-SP) sont effacées.

13. Procédé suivant la revendication 11 ou 12, caractérisé par le fait qu'après l'exploration de toutes les unités de mémoire (SP-E1) à SP-En) de la mémoire de base (B-SP), toutes les données contenues dans cette mémoire sont à nouveau explorées sur la base de l'argument de recherche (SBM1) valable en dernier lieu et que les données contenues dans la mémoire de base (B-SP) et caractérisées, par un coup au but de la mémoire associative (AM/OP) sont marquées comme étant extraites sans que des données soient transférées dans la mémoire auxiliaire (H-SP).

14. Procédé suivant la revendication 10 ou 13, caractérisé par le fait que toutes les données extraites d'une unité de mémoire (par exemple SP-E1) sont marquées simultanément comme étant des données extraites.

15. Procédé suivant l'une des revendications 9 à 14, caractérisé par le fait que l'argument respectif de recherche ou de tri (SBM1 ou SBM2) est délivré par un générateur de profils binaires de tri (SBM-G), qui peut être commandé en fonction du résultat respectif de la recherche ou du tri.

# FIG 1

FIG 2

2

# FIG 3

SBM - G

M

AM

Z-AD

OP

AUS

T-ST

S-AD

Z-AD

SP-E1

B-SP

AM-AW

DÜW

S-ST

SP-AW

M-ST

E-AD

SP-En

H-SP

FÜW

HSP-ST

EIN

Z-AD

P-SP

EIN'

# FIG 4

SBM 1 — UVW     SBM-G

SBM 2

    M

SP-E1     UVW | B xxxx

SP-E2     UVW | A xxxx

    UVW | C xxxxx

    UVW | E xxxxx

B-SP

SP-En     UVW | D xxxxx

H-SP

UVW | B xxxxx
UVW | A xxxxx
UVW | C xxxxx
UVW | E xxxxx
UVW | D xxxxx

# FIG 5

| T = ? | LSB = ? | SBM - Änderung | |
|-------|---------|----------------|---|
|       |         | vorw. sortieren | rückw. sortieren |
| > 1 | = X | 0 anhängen | 1 anhängen |
| = 0,1 | = 0 | LSB invertieren | LSB streichen |
|       | = 1 | LSB streichen | LSB invertieren |

A = 0 0 0 1 0

B = 0 0 1 0 1          FIG 6

C = 1 0 0 1 0

| SBM2 | LSB | T | SMB - Änderung | Ausgabe |
|------|-----|---|----------------|---------|
| 0 | 0 | > 1 | 0 anhängen | |
| 0 0 | 0 | > 1 | 0 anhängen | |
| 0 0 0 | 0 | = 1 | LSB invertieren | A |
| 0 0 1 | 1 | = 1 | LSB streichen | B |
| 0 0 | 0 | = 0 | LSB invertieren | |
| 0 1 | 1 | = 0 | LSB streichen | |
| 0 | 0 | = 0 | LSB invertieren | |
| 1 | 1 | = 1 | LSB streichen | C |

FIG 7A

AUS : 5,8,15      19, 21, 23      26,27,28

0 035 787

# FIG 7B

SL4    SL5    SL6    SL7

SBM 1

M

H-SP

SL2 ⊗ | 0 | 1 | 0 | 1 | 0 | 1 | 21
SL2 ⊗ | 0 | 1 | 0 | 1 | 1 | 1 | 23
SL3 ⊗ | 0 | 1 | 1 | 1 | 0 | 0 | 28
SL6 ⊗ | 1 | 0 | 0 | 0 | 0 | 0 | 32

SP-E1

| 1 |
| 1 | 0 | 0 | 0 | 0 | 32

T=0    T=0    T=0

SL6 ⊗ | 1 | 0 | 0 | 1 | 0 | 1 | 37
SL7 ⊗ | 1 | 1 | 0 | 0 | 0 | 0 | 48
SL7 ⊗ | 1 | 1 | 0 | 1 | 0 | 1 | 53
SL6 ⊗ | 1 | 0 | 1 | 1 | 1 | 0 | 46

SP-E2

T=0    T=0

| 1 |
| 1 | 0 | 0 | 0 | 0 | 32
| 1 | 0 | 0 | 1 | 0 | 1 | 37
| 1 | 1 | 0 | 0 | 0 | 0 | 48 → L
| 1 | 1 | 0 | 1 | 0 | 1 | 53 → L

1 | 0 →

H-SP

| 1 | 1 |
| 1 | 1 | 0 | 0 | 0 | 0 | 48
| 1 | 1 | 0 | 1 | 0 | 1 | 53

| 1 | 0 |
| 1 | 0 | 0 | 0 | 0 | 0 | 32
| 1 | 0 | 0 | 1 | 0 | 1 | 37
| 1 | 0 | 1 | 1 | 1 | 0 | 46

SP-E3

SL7 ⊗ | 1 | 1 | 0 | 0 | 1 | 0 | 50
SL7 ⊗ | 1 | 1 | 1 | 0 | 1 | 1 | 59
SL3 ⊗ | 0 | 1 | 1 | 0 | 1 | 1 | 26
SL2 ⊗ | 0 | 1 | 0 | 0 | 1 | 1 | 19

SP-E4

SL3 ⊗ | 0 | 1 | 1 | 0 | 1 | 1 | 27
SL1 ⊗ | 0 | 0 | 1 | 0 | 0 | 0 | 8
SL1 ⊗ | 0 | 0 | 0 | 1 | 0 | 1 | 5
SL1 ⊗ | 0 | 0 | 1 | 1 | 1 | 1 | 15

T=0    T=0    T=0    T=0

| 1 | 1 |
| 1 | 1 | 0 | 0 | 0 | 0 | 48
| 1 | 1 | 0 | 1 | 0 | 1 | 53
| 1 | 1 | 0 | 0 | 1 | 0 | 50
| 1 | 1 | 1 | 0 | 1 | 1 | 59

T=0    T=0    T=0    T=0

AUS:    —    —    32,37,46    48,50,53,59

0 035 787

# FIG 8